# EUROPÄISCHE PATENTANMELDUNG

(11) **EP 4 269 030 A1**
(43) Veröffentlichungstag der Anmeldung: **01.11.2023**
(21) Anmeldenummer: 22169900.2
(22) Anmeldetag: 26.04.2022
(51) Int. Cl.: B25D 11/10, B25D 17/00, B23B 45/00

(54) **EXTERNES MODUL ZUR BEREITSTELLUNG EINER SCHLAGFUNKTION UND SYSTEM AUS WERKZEUGMASCHINE UND EXTERNEM MODUL**

(71) Anmelder: Hilti Aktiengesellschaft, 9494 Schaan (LI)
(72) Erfinder: Laipple, Benno, 86899 Landsberg am Lech (DE); Taack-Trakranen, John Van, 81475 Muenchen (DE)
(74) Vertreter: Hilti Aktiengesellschaft Corporate Intellectual Property

(57) **Zusammenfassung**

Die vorliegende Erfindung betrifft ein externes Modul (10) zur Bereitstellung einer Schlagfunktion für eine Werkzeugmaschine (100). Das externe Modul weist Kurvenscheiben(12, 14) auf, von denen eine wellenfest und die andere gehäusefest ausgebildet ist. Die Kurvenscheiben können so beschaffen sein bzw. zusammenwirken, dass eine Schlagbewegung erzeugt wird, mit der die Drehbewegung des Werkzeugs (102) der Werkzeugmaschine überlagert werden kann. In einem zweiten Aspekt betrifft die Erfindung ein System (50) aus Werkzeugmaschine (100) und externem Modul (10).

## Beschreibung

Die vorliegende Erfindung betrifft ein externes Modul zur Bereitstellung einer Microhammering- oder Schlagfunktion für eine Werkzeugmaschine. Beim Microhammering werden Schlagbewegungen erzeugt, die eine reine Drehbewegung des Werkzeugs der Werkzeugmaschine überlagern und so beispielsweise eine Bohrkraft der Werkzeugmaschine erhöhen können. Das externe Modul weist Kurvenscheiben auf, von denen eine wellenfest und die andere gehäusefest ausgebildet ist. Die Kurvenscheiben können so beschaffen sein bzw. zusammenwirken, dass eine Schlagbewegung erzeugt wird, mit der die Drehbewegung des Werkzeugs der Werkzeugmaschine überlagert werden kann. Das externe Modul kann wie ein Adapter zwischen der Werkzeugmaschine und seinem Werkzeug angebracht werden. In einem zweiten Aspekt betrifft die Erfindung ein System aus Werkzeugmaschine und externem Modul.

### Hintergrund der Erfindung:

Im Bereich Werkzeugmaschinen sind Bohrgeräte, insbesondere Kernbohrgerät, bekannt, mit denen im Wesentlichen zylinderförmige Bohrkeme aus einem zu bearbeitenden Untergrund herausgeschnitten werden können. Solche Bohrgeräte weisen als Werkzeug häufig eine sog. Bohrkrone auf, die von einem Motor des Bohrgeräts zu einer Drehbewegung angetrieben wird. Ein solches Bohrgerät kann eine mechanische Getriebeeinheit aufweisen, um das Bohrgerät in verschiedenen Gängen und Leistungsbereichen zu betreiben.

Um die Arbeitskraft solcher Bohrgerät zu erhöhen sind im Stand der Technik Bohrgeräte vorgeschlagen worden, die ein zusätzliches Schlagwerk aufweisen, welches dazu ausgebildet ist, Schlagbewegungen zu erzeugen und der reinen Drehbewegung des Bohrgeräts aufzuprägen. Als Ergebnis wird zumeist eine überlagerte Bewegung aus Dreh- und Schlagbewegung erhalten, mit der der Untergrund bearbeitet werden kann.

Nachteilig an diesen bekannten Bohrgeräten mit integriertem Schlagmechanismus ist aber, dass diese oft zusätzlich zu konventionellen Bohrgeräten angeschafft werden müssen und dass der Nutzer häufig ein konventionelles, sowie ein Bohrgerät mit Schlagmechanismus mitführen muss, um zu erledigende Bohrarbeiten stets mit einem optimal geeigneten Gerät auszuführen.

Ein weiterer Nachteil besteht darin, dass für schlagende und drehende Bewegungen unterschiedliche Anforderungen an die einzusetzenden Schmierstoffe bestehen. Bei einem Bohrgerät mit integriertem Schlagmechanismus gehen die Bereiche des Bohrgeräts, in dem die Dreh- bzw. die Schlagebewegung erzeugt wird, fließend ineinander über, so dass keine unterschiedlichen und damit optimal an die unterschiedlichen Herausforderungen angepasste Schmierstoffe eingesetzt werden können. Selbst wenn anfangs unterschiedliche Schmierstoffe eingesetzt werden, vermischen sich diese im Laufe der Zeit, so dass die Vorteile der unterschiedlichen Schmierstoffe mit der Zeit verschwinden. Darüber hinaus kann es im Laufe der Zeit zu einem Abrieb der einzelnen Komponenten der Werkzeugmaschine kommen, wobei die abgeriebenen Partikel frei in der Werkzeugmaschine herumwandern können. Durch die Abriebs-Partikel kann es zu Verunreinigungen der Schmierstoffe kommen, wobei die Verunreinigungen die Schmierfähigkeit der Schmierstoffe herabsetzen können.

Bei Bohrgeräten mit integriertem Schlagmechanismus besteht ein weiterer Nachteilt darin, dass die insbesondere bei Betrieb des Schlagmechanismus auftretenden Schlagbewegungen auf einen Nutzer oder einen Bohrständer übertragen werden können. Für den Nutzer kann diese zu Schmerzen und Beeinträchtigungen der Handgelenke führen. In Bezug auf den Bohrständer kann die Stabilität der Verbindung zwischen Bohrgerät und Bohrständer verloren gehen, wodurch sich das Bohrgerät ungewollt von dem Bohrständer lösen und beispielsweise herunterfallen und auf dem Erdboden aufschlagen kann. Dies ist insbesondere dann von Nachteil, wenn ein batteriebetriebenes Bohrgerät betroffen ist, da Batterien oder Akkumulatoren sehr empfindliche Bauteile einer Werkzeugmaschine darstellen.

Die Aufgabe, die der vorliegenden Erfindung zugrunde liegt, besteht darin, die vorstehend beschriebenen Mängel und Nachteile des Standes der Technik zu überwinden und eine technische Lösung zur Erzeugung von Schlagbewegungen bereitzustellen, mit denen eine Drehbewegung eines Werkzeugs einer Werkzeugmaschine überlagert werden kann. Die Lösung soll für den Nutzer einfach und komfortabel in der Anwendung und Handhabung sein. Darüber hinaus soll eine optimale Versorgung der unterschiedlichen Komponenten der technischen Lösung mit Schmierstoff gewährleistet werden und es sollen mechanischen Beeinträchtigungen und die Übertragung von Vibrationen auf den Nutzer oder einen ggf. verwendeten Bohrständer reduziert werden.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein externes Modul zur Erzeugung einer Schlagbewegung vorgesehen. Das externe Modul ist an eine Werkzeugmaschine anbringbar, wobei ein Werkzeug der Werkzeugmaschine dazu ausgebildet ist, eine Drehbewegung auszuführen. Das externe Modul umfasst eine erste Kurvenscheibe und eine zweite Kurvenscheibe, wobei die erste Kurvenscheibe mit einer Wellenvorrichtung des externen Moduls verbunden vorliegt und die zweite Kurvenscheibe ortsfest mit einem Gehäuse des externen Moduls verbunden vorliegt, wobei die erste Kurvenscheibe und die zweite Kurvenscheibe zur Erzeugung der Schlagbewegung zusammenwirken, wobei das externe Modul dazu ausgebildet ist, die Drehbewegung des Werkzeugs der Werkzeugmaschine mit der Schlagbewegung zu überlagern. Es ist im Sinne der Erfindung bevorzugt, dass die erste Kurvenscheibe des externen Moduls als wellenfeste Kurvenscheibe ausgebildet ist, d.h. mit einer Wellenvorrichtung des externen Moduls verbunden vorliegt, während die zweite Kurvenscheibe des externen Moduls als gehäusefeste Kurvenscheibe ausgebildet ist, indem die zweite Kurvenscheibe ortsfest mit dem Gehäuse des externen Moduls verbunden vorliegt. Es ist im Sinne der Erfindung bevorzugt, dass die erste Kurvenscheibe in rotatorischer bzw. tangentialer Richtung fest mit der Wellenvorrichtung verbunden ist, während die zweite Kurvenscheibe in rotatorischer bzw. tangentialer Richtung fest mit dem Gehäuse des externen Moduls verbunden ist. Vorzugsweise sind die Wellenvorrichtung und die erste Kurvenscheibe in axialer Richtung beweglich ausgebildet, wobei sich die Wellenvorrichtung und die erste Kurvenscheibe vorzugsweise zusammen, d.h. gemeinsam, zwischen Anschlägen bzw. in einem gewissen, dafür vorgesehenen Bereich hin- und herbewegen können. Durch die bewegliche Ausgestaltung der Wellenvorrichtung und die erste Kurvenscheibe werden vorzugsweise die Axialhubbewegungen der ersten Kurvenscheibe und der Wellenvorrichtung ermöglicht, die die Schlagbewegungen erzeugen.

Mit der Erfindung kann eine Werkzeugmaschine bereitgestellt werden, die mit einem externen Modul dazu ertüchtigt werden kann, eine Microhammering-Funktion bereitzustellen. Diese Art und Weise der Bereitstellung einer Microhammering-Funktion, wird im Sinne der Erfindung bevorzugt als «Modul-Lösung» bezeichnet, während alternative Ansätze, bei denen die Schlagbewegung in der Werkzeugmaschine selbst erzeugt wird, als «integrierte» Lösung» bezeichnet werden.

Ein Vorteil der Erfindung besteht darin, dass mit dem vorgeschlagenen System bzw. dem externen Modul eine reine Drehbewegung des Werkzeugs der Werkzeugmaschine in eine überlagerte Dreh- und Schlagbewegung umgewandelt werden kann. Dabei kann der Nutzer der Werkzeugmaschine je nach durchzuführender Anwendung entscheiden, ob er das externe Modul zur Erzeugung einer Schlagbewegung verwenden möchte oder nicht. Mit anderen Worten kann der Nutzer eine konventionelle Werkzeugmaschine, die dazu eingerichtet ist, allein eine Drehbewegung zu erzeugen, mit Hilfe des externen Moduls dazu in die Lage versetzen, eine überlagerte Dreh- und Schlagbewegung zu erzeugen. Das externe Modul kann somit als Nachrüst-Option für konventionelle Werkzeugmaschinen ohne Schlagfunktion verwendet werden, wobei die Werkzeugmaschine durch dieses Nachrüsten vorteilhafterweise zur Erzeugung einer kombinierten Dreh- und Schlagbewegung ertüchtigt werden kann. Indem die Schlagbewegung nicht integriert durch feste Bestandteile innerhalb der Werkzeugmaschine erzeugt wird, sondern es dem Nutzer freisteht, die Schlagbewegung zusätzlich zu der Drehbewegung des Werkzeugs durch Verwendung des externen Moduls hinzuzuschalten, kann ein besonders flexibles Arbeits- und Werkzeugsystem bereitgestellt werden. Insbesondere kann der Nutzer das externe Modul für unterschiedliche Werkzeugmaschinen verwenden, so dass beispielsweise eine ganze Flotte von Werkzeugmaschinen zur Durchführung einer überlagerten Dreh- und Schlagbewegung ertüchtigt werden kann. Darüber hinaus muss der Nutzer nicht mehr zwei unterschiedliche Bohrgeräte (mit und ohne Schlagfunktion) auf eine Baustelle mitnehmen, wenn er eine Bohrung durchführen möchte, sondern es ist ausreichend, ein Bohrgerät und das externe Modul mitzuführen.

Die Überlagerung der Drehbewegung des Werkzeugs der Werkzeugmaschine mit der von dem externen Modul erzeugten Schlagbewegung wird im Sinne der Erfindung vorzugsweise auch als «Auf- oder Einprägen einer Schlagbewegung auf eine bestehende Drehbewegung einer Werkzeugmaschine bzw. seines Werkzeugs» bezeichnet. Die Schlagbewegungen oder Schläge werden vorzugsweise als «Microhammering» bezeichnet. Mit der Erfindung kann somit insbesondere eine Microhammering-Funktion bereitgestellt werden, wobei die Erzeugung der dazu erforderlichen Schlagbewegungen gerade nicht - wie im Stand der Technik - im Wege einer integrierten Lösung innerhalb der Werkzeugmaschine erfolgt, sondern durch das externe Modul. Dadurch ist der Nutzer der Werkzeugmaschine einer geringeren Belastung durch die Schläge ausgesetzt, da der Lastweg durch die Verwendung des externen Moduls verlängert wird und Vibrationen und Schläge durch Komponenten des externen Moduls aufgenommen und somit erheblich verringert werden können. Beispielsweise können Teile des Gehäuses des externen Moduls Kunststoff umfassen oder aus Kunststoff gebildet sein, so dass diese Kunststoffkomponenten im Vergleich zu den Stahl-Komponenten elastisch ausgebildet sind und Schläge und Vibrationen aufnehmen können. Darüber hinaus können zwischen dem externen Modul und der Werkzeugmaschine weitere Dämpfungsmittel vorgesehen sein, um Schläge und Vibrationen für den Nutzer oder den Bohrständer weiter zu reduzieren.

Darüber hinaus können in der Werkzeugmaschine und in dem externen Modul unterschiedliche Schmierstoffe eingesetzt werden. Insbesondere ist es im Sinne der Erfindung bevorzugt, dass innerhalb der Werkzeugmaschine solche Schmierstoffe eingesetzt werden, die für Drehbewegungen optimiert sind, während in dem externen Modul solche Schmierstoffe zum Einsatz kommen können, die für Schlagbewegungen optimiert sind. Dadurch kann insgesamt eine besonders gute Schmierung des Systems und ein guter Schutz der Komponenten des Systems vor Verschleiß gewährleistet werden.

Die Möglichkeit, eine Microhammering-Funktion bereitzustellen, ermöglicht es insbesondere, dass auf die Verwendung von Spül- oder Kühlwasser bei Betrieb der Werkzeugmaschine verzichtet werden kann. Dadurch kann das Maß an Verschmutzungen auf einer Baustelle erheblich reduziert werden. Außerdem können auf diese Weise beispielsweise Kernbohrungen durchgeführt werden an Stellen oder Baustellen-Bereichen, an denen keine Wasserversorgung vorhanden ist oder in solchen Bereichen, in denen der Einsatz von Spül- oder Kühlwasser nicht zulässig ist. Dies kann beispielsweise im Bereich von saugfähigen Baumaterialien, wie Gips oder Karton, der Fall sein oder in empfindlichen Gebäudetypen, wie Krankenhäusern oder dergleichen, oder in der Nähe von elektrischen Anlagen, wie Serverräumen oder Schaltschränken. Darüber hinaus kann die Arbeit mit der Werkzeugmaschine sicherer gestaltet werden, da die Kombination aus Strom und Wasser auf einer Baustelle ein Sicherheitsrisiko darstellen kann. Die Erfindung kann durch den Verzicht auf die Verwendung von Spül- oder Kühlwasser das «trockene Bohren» auf einer Baustelle ermöglichen, was einen wesentlichen Vorteil der Erfindung darstellt.

Durch die Schlagbewegungen, die im Kontext der vorliegenden Erfindung bevorzugt auch als «Schläge» bezeichnet werden, kann die Arbeit mit der Werkzeugmaschine wesentlich effizienter gestaltet werden. Die Werkzeugmaschine kann beispielsweise als Bohrgerät oder als Kernbohrgerät ausgestaltet sein. Das Werkzeug der Werkzeugmaschine kann dann beispielsweise eine Bohrkrone sein, mit der zylinderförmige Bohrkerne aus einem zu bearbeitenden Untergrund herausgeschnitten werden können. Solche Bohrgeräte können zum Beispiel mit einer im Wesentlichen statischen, d.h. konstanten, Bohrkraft arbeiten. Eine solche Bohrkraft kann beispielsweise in einem Bereich von 1.000 Newton (N) liegen. Auf diese Bohrkräfte sind die Bohrgeräte und ihre Komponenten auch ausgelegt, d.h. ein Nutzer kann mit dieser im Wesentlichen statischen Bohrkraft arbeiten, ohne befürchten zu müssen, dass es zu Schäden oder mechanischen Beeinträchtigungen an der Werkzeugmaschine oder ihren Komponenten kommt.

Mit dem vorgeschlagenen externen Modul können vorteilhafterweise Schläge mit Kraft-Peaks von bis zum 10.000 Newton erzeugt werden. Wenn der Schlagmechanismus integriert in der Werkzeugmaschine vorliegt, wie dies bei praktisch allen Geräten, die aus dem Stand der Technik bekannt sind, der Fall ist, sind solche konventionellen Werkzeugmaschinen und ihre Komponenten erheblichen mechanischen Belastungen ausgesetzt, die zu Schäden an den Werkzeugmaschinen und ihren Komponenten führen können. Sich davon abwendend, erfolgt die Erzeugung der Schlagbewegung im Kontext der vorliegenden Erfindung in einem oder durch ein externes Modul, das zwischen dem Werkzeug und der Werkzeugmaschine angeordnet werden kann. Durch die konkrete, weiter unten beschriebene Ausgestaltung des externen Moduls können diese mechanischen Belastungen und Risiken für die Werkzeugmaschinen und ihren Komponenten erheblich reduziert werden.

Vorteilhafterweise kann die Bohrkraft mittels der Micro-Schläge erheblich erhöht werden, so dass Arbeiten mit einer Werkzeugmaschine, die ein externes Modul zur Schlagerzeugung aufweist, schneller und effizienter erledigt werden können. Diese Erhöhung der bevorzugt im Wesentlichen axial wirkenden Bohrkraft wird im Sinne der Erfindung bevorzugt auch als «Überhöhung der axialen Bohrkraft» bezeichnet.

Mit dem vorgeschlagenen externen Modul kann eine Schlagbewegung erzeugt werden, die mit einer Drehbewegung eines Werkzeugs einer Werkzeugmaschine überlagert werden kann. Die Schlagbewegung stellt dabei vorzugsweise eine im Wesentlichen axiale Schlagbewegung dar, die bevorzugt entlang einer zentral im System verlaufenden Welle bzw. entlang einer zentralen Geräteachse orientiert ist. Die Schlagbewegung wird vorzugsweise durch einen alternierenden Axialhub zwischen den beiden Kurvenscheiben des externen Moduls erzeugt, wobei der alternierenden Axialhub vorteilhafterweise dazu in der Lage ist, eine im Wesentlichen axiale Bohrkraft auf das Werkzeug der Werkzeugmaschine zu übertragen.

Es ist im Sinne der Erfindung bevorzugt, dass eine Eingangsgröße für das externe Modul eine im Wesentlichen reine Drehbewegung der Werkzeugmaschine bzw. seines Werkzeugs ist. Dabei kann diese reine Drehbewegung durch die von dem externen Modul erzeugten Micro-Schläge überlagert werden, so dass eine gemischte Dreh- und Schlagbewegung erzeugt wird, mit der ein Untergrund bearbeitet werden kann. Die Drehbewegung der Werkzeugmaschine kann von der Wellenvorrichtung der Werkzeugmaschine, die vorzugsweise als Getriebeabtriebswelle fungiert, auf die Wellenvorrichtung des externen Moduls und von dort weiter auf die Werkzeugaufnahme und/oder das Werkzeug der Werkzeugmaschine übertragen werden, wobei vorzugsweise gleichzeitig auch ein Drehmoment von der Werkzeugmaschine auf ihr Werkzeug übertragen wird. Zwischengeschaltet zwischen der Werkzeugmaschine und ihrem Werkzeug kann das externe Modul zur Erzeugung von Schlagbewegungen vorliegen, mit denen die reine Drehbewegung der Werkzeugmaschine überlagert werden kann.

Ein weiterer Vorteil der Erfindung besteht darin, dass durch die Vorsehung eines externen Moduls der Ort, an dem die Schlagbewegung erzeugt wird, getrennt ist von den übrigen Komponenten, insbesondere den empfindlichen Getriebekomponenten, der Werkzeugmaschine. Durch diese räumliche Trennung von Schlagerzeugung und Werkzeugmaschine können die Komponenten der Werkzeugmaschine besonders gut vor auftretenden mechanischen Belastungen geschützt werden. Darüber hinaus ist es durch die räumliche Trennung möglich, in dem externen Modul und in der Werkzeugmaschine unterschiedliche Schmierstoffe einzusetzen. Wenn in der Werkzeugmaschine beispielsweise ein Getriebe, insbesondere ein Schaltgetriebe, zum Einsatz kommt, können die Anforderungen an den zu verwendenden Schmierstoff deutlich abweichen im Vergleich zu den Schmierstoff-Anforderungen, die der Schlagmechanismus des externen Moduls erfordert. Aufgrund der räumlichen Trennung können in der Werkzeugmaschine und in dem externen Modul solche Schmierstoffe verwendet werden, die auf die jeweilige Anwendung optimal abgestimmt sind, ohne dass eine Gefahr besteht, dass sich diese Schmierstoffe unerwünschterweise vermischen. Dadurch kann vorteilhafterweise die Leistungsfähigkeit und die Lebensdauer der Werkzeugmaschine, des externen Moduls und ihrer jeweiligen Komponenten erheblich erhöht bzw. verlängert werden. Dies ist insbesondere auch aus dem Grund von Vorteil, dass auf aufwändige Dichtungen, wie sie bei integrierten Lösungen von Schlagmechanismen in Werkzeugmaschinen üblich sind, verzichtet werden kann. Darüber hinaus hat sich gezeigt, dass eine Beanspruchung der übrigen Getriebekomponenten der Werkzeugmaschine durch Abrieb bzw. Abriebs-Partikel wesentlich reduziert werden kann.

Ein weiterer Vorteil der Erfindung besteht darin, dass durch die räumliche Trennung und durch die Vorsehung des externen Moduls Vibrationen und Schläge des Werkzeugs der Werkzeugmaschine weniger stark auf den Nutzer übertragen werden. Der Nutzer hält die Werkzeugmaschine häufig in den Händen, wobei die Werkzeugmaschine dafür in bekannter Weise ein oder zwei Griffe aufweisen kann. Indem zwischen dem Werkzeug und der Werkzeugmaschine das externe Modul «zwischengeschaltet» werden kann, wird eine Übertragung von Vibrationen, die bei Betrieb des Werkzeugs der Werkzeugmaschine auftreten, wesentlich erschwert. Dadurch werden die Gelenke, insbesondere die Handgelenke, des Nutzers wesentlich entlastet oder der Nutzer kann alternativ länger mit der Werkzeugmaschine arbeiten, ohne Vibrations- oder Belastungs-Grenzwerte zu erreichen. Damit leistet die Erfindung auch einen Beitrag zum Gesundheitsschutz des Nutzers der Werkzeugmaschine, an der ein externes Modul zur Schlagerzeugung befestigt ist.

Es ist im Sinne der Erfindung bevorzugt, dass die Kurvenscheiben jeweils mindestens ein Strukturelement aufweisen, wobei die Strukturelemente bei einer rotatorischen Relativbewegung der ersten Kurvenscheibe und der zweiten Kurvenscheibe einen alternierenden Axialhub erzeugen. Die Strukturelemente können beispielsweise als vorstehende Rampen oder als nach innen ragende Rampen ausgebildet sein. Die Kurvenscheiben weisen vorzugsweise je eine Oberfläche auf, auf denen die Strukturelemente angeordnet sein können. Es ist im Sinne der Erfindung ganz besonders bevorzugt, dass die Kurvenscheiben in Bezug auf ihre Oberflächen im Wesentlichen gleich oder identisch ausgebildet sind. Das bedeutet im Sinne der Erfindung bevorzugt, dass die sich im Betrieb der Werkzeugmaschine gegenüberliegenden Oberflächen der Kurvenscheiben eine gleiche Anzahl von Strukturelementen aufweisen, wobei die Strukturelemente im Wesentlichen gleich oder ähnlich ausgestaltet sind und an im Wesentlichen korrespondierenden Orten und Positionen angeordnet vorliegen. Vorzugsweise weisen die Kurvenscheiben im Wesentlichen gleiche oder identische Profile auf. Beispielsweise können auf einer Kurvenscheibe 5 bis 50 Strukturelemente vorgesehen sein. In bevorzugten Ausführungsformen der Erfindung können die Kurvenscheiben je 10 bis 30 und besonders bevorzugt 15 bis 20 Strukturelemente aufweisen. Beispielsweise können auf den Kurvenscheiben 17 Strukturelemente angeordnet vorliegen, wobei Tests gezeigt haben, dass bei der Verwendung von Kurvenscheiben mit 17 Strukturelementen besonders gleichmäßig und wirkungsvolle Schläge erzeugt werden können. Die Strukturelemente können vorzugsweise gleichmäßig auf einem Umfang der Kurvenscheiben angeordnet vorliegen.

Wenn die Strukturelemente rampenförmig ausgebildet sind, können die Strukturelemente eine schiefe Ebene umfassen, die sich unter Einschluss eines Neigungswinkels zwischen einem tiefsten Punkt und einem höchsten Punkt des Strukturelements erstreckt. Eine Höhendifferenz zwischen dem tiefsten Punkt und dem höchsten Punkt der Strukturelemente kann beispielsweise in einem Bereich von 0,1 bis 3 mm liegen. Bevorzugt kann die Höhendifferenz in einem Bereich von 0,3 bis 1 mm oder besonders bevorzugt bei ca. 0,5 mm liegen. Auch Höhendifferenzen von 0,35 oder 0,65 mm haben sich als besonders geeignet erwiesen, um einen Axialhub zu erzeugen, mit dem eine wirkungsvolle Schlagbewegung erzeugt werden kann.

Die Kurvenscheiben sind so in dem externen Modul montiert, dass sie einander zugewandte Oberflächen aufweisen, wobei die Strukturelemente auf den Oberflächen der Kurvenscheiben angeordnet vorliegen. Die Oberflächen der Kurvenscheiben werden bei einer rotatorischen Relativbewegung der ersten und der zweiten Kurvenscheibe aufeinandergedrückt, so dass eine "ratternde" Bewegung mit wiederkehrendem Axialhub erzeugt wird.

Die Strukturelemente können vorzugsweise als nach innen gerichtete Ausnehmungen oder Vertiefungen ausgebildet sein, die beispielsweise die Form einer nach innen gerichteten Rampe aufweisen. Es kann im Sinne der Erfindung aber auch bevorzugt sein, dass die Strukturelemente als überstehende Elemente ausgebildet sind, die aus den Grundflächen der Kurvenscheiben herausragen.

Es ist im Sinne der Erfindung, dass die Strukturelemente der einen Kurvenscheibe bei einer rotatorischen Relativbewegung der Kurvenscheiben von den Strukturelementen der jeweils anderen Kurvenscheibe durchlaufen werden. Die rotatorische Drehbewegung kommt vorzugsweise dadurch zustande, dass sich die erste Kurvenscheibe zusammen mit der Wellenvorrichtung des externen Moduls drehen kann, während die zweite Kurvenscheibe stillt steht. Im Ergebnis ergibt sich eine rotatorische Relativbewegung der Kurvenscheiben zueinander. Der Axialhub entsteht vorzugsweise dadurch, dass die in axialer Richtung vorzugsweise beweglich ausgebildete erste Kurvenscheibe in axialer Richtung dem Verlauf der Strukturelemente der zweiten Kurvenscheibe folgt. Dadurch kann die erste Kurvenscheibe in axialer Richtung verschoben bzw. angehoben werden. Insbesondere wird die erste Kurvenscheibe bzw. die Welle, an der sie befestigt vorliegt, durch diesen Axialhub in Richtung der Werkzeugmaschine verschoben, so dass das Werkzeug der Werkzeugmaschine um eine kurze Wegstrecke angehoben wird. Wenn die Strukturelemente rampenförmig ausgebildet sind und eine schiefe Ebene umfassen, folgt die erste Kurvenscheibe dem Verlauf dieser schiefen Ebenen. Vorzugsweise kann die Kurvenscheibe von dem höchsten Punkt zurück auf den tiefsten Punkt des vorzugsweise rampenförmig ausgebildeten Strukturelements springen, wodurch es zu einem kleinen Sprung der ersten Kurvenscheibe in axialer Richtung kommt. Vorzugsweise wird dieser kleine Sprung der ersten Kurvenscheibe im Sinne der Erfindung bevorzugt als "Axialhub" bezeichnet. Der Sprung der ersten Kurvenscheibe kann über die Wellenvorrichtung auf das Werkzeug der Werkzeugmaschine übertragen werden. Durch das bevorzugt schlagartige Zurückfallen der ersten Kurvenscheibe vom höchsten auf den tiefsten Punkt der Strukturelemente wird die Schlagbewegung erzeugt, die dann als Schlagbewegung des Werkzeugs der Werkzeugmaschine auf den zu bearbeitenden Untergrund übertragen werden kann. Die Schlagbewegung stellt insbesondere einen Schlagimpuls dar, mit dem die Drehbewegung des Werkzeugs der Werkzeugmaschine überlagert werden kann. Der Schlagimpuls wird insbesondere dadurch erzeugt, dass die erste Kurvenscheibe nach ihrem Sprung auf der Oberfläche der zweiten Kurvenscheibe aufkommt bzw. landet.

Es ist im Sinne der Erfindung bevorzugt, dass durch die vorstehend beschriebene axiale HubBewegung der ersten Kurvenscheibe auch die Welle innerhalb des externen Moduls zu einer solchen Axialbewegung verleitet wird. Dies wird vorteilhafterweise dadurch erreicht, dass die Welle, die im Sinne der Erfindung bevorzugt auch als "Modulwelle" bezeichnet wird, mit der ersten Kurvenscheibe fest verbunden vorliegt. Die erste Kurvenscheibe kann daher auch als "wellenfeste Kurvenscheibe" bezeichnet werden, während die zweite Kurvenscheibe ortsfest mit dem Gehäuse des externen Moduls verbunden vorliegt, d.h. insbesondere «gehäusefest» ausgebildet ist. Es ist im Sinne der Erfindung ganz besonders bevorzugt, dass die Kurvenscheiben durch die Bohrkraft gegen- bzw. aufeinander gepresst werden und durch die Drehbewegung der Modulwelle rotatorisch aufeinander gleiten. Vorzugsweise bewegt sich dabei die vorzugsweise bewegliche ausgebildete erste Kurvenscheibe auf der vorzugsweise ortsfest ausgebildeten zweiten Kurvenscheibe, so dass eine Relativbewegung zwischen den Kurvenscheiben insbesondere eine Bewegung der ersten Kurvenscheibe auf der zweiten Kurvenscheibe umfasst.

Es ist im Sinne der Erfindung bevorzugt, dass die Schlagbewegung, die von dem externen Modul erzeugt werden kann, eine höhere Frequenz aufweist als die Drehbewegung der Werkzeugmaschine und/oder seines Werkzeugs. Vorzugsweise weist der axiale Axialhub eine höhere Frequenz auf als die Drehbewegung der Werkzeugmaschine bzw. seines Werkzeugs. Das bedeutet im Sinne der Erfindung, dass die Schlagbewegung, die von dem externen Modul erzeugt wird, eine höhere Frequenz aufweist als die bestehende Drehbewegung der Werkzeugmaschine. Mit anderen Worten ist das externe Modul dazu eingerichtet, eine Anzahl von Schlägen pro Zeiteinheit zu erzeugen, wobei diese Anzahl von Schlägen größer ist als eine Anzahl von Umdrehungen des Werkzeugs der Werkzeugmaschine pro derselben Zeiteinheit. Das bedeutet im Sinne der Erfindung bevorzugt, dass pro Zeiteinheit mehr Schlagbewegungen erzeugt werden als Drehbewegungen des Werkzeugs der Werkzeugmaschine stattfinden. Die Schlagbewegungen können somit bevorzugt durch einen höherfrequenten Axialhub erzeugt werden.

Es ist im Sinne der Erfindung bevorzugt, dass das externe Modul eine Verlängerung der Wellenvorrichtung aufweist. Die Wellenvorrichtung des externen Moduls, die mit der ersten, «wellenfesten» Kurvenscheibe des externen Moduls verbunden vorliegt, kann im Sinne der Erfindung bevorzugt auch als «Modulwelle», «Getriebeabtriebswelle» oder «Welle» bezeichnet werden, wobei die genannten Begriffe im Kontext der vorliegenden Erfindung synonym verwendet werden.

Es ist im Sinne der Erfindung bevorzugt, dass die Wellenvorrichtung des externen Moduls eine erste Teilwelle und eine zweite Teilwelle umfasst, wobei die erste Teilwelle und die zweite Teilwelle über eine Schnittstelle miteinander verbindbar sind. Vorzugsweise kann die erste Teilwelle oder die zweite Teilwelle in axialer Richtung ortsfest ausgebildet sein, während die jeweils andere Teilwelle in axialer Richtung beweglich ausgebildet ist. Dabei kann die erste Kurvenscheibe insbesondere auf der in axialer Richtung beweglich ausgebildeten Teilwelle angeordnet vorliegen, so dass auch die erste Kurvenscheibe in axialer Richtung beweglich ausgebildet ist. In einer ganz besonders bevorzugten Ausgestaltung der Erfindung liegt die erste Kurvenscheibe insbesondere mit der ersten Teilwelle der Wellenvorrichtung verbunden vor, so dass sich die erste Kurvenscheibe vorzugsweise zusammen mit der ersten Teilwelle der Wellenvorrichtung zusammen drehen kann.

Die zweite Teilwelle kann vorzugsweise eine Verlängerung der Wellenvorrichtung des externen Moduls in Richtung Werkzeugmaschine darstellen. In einer alternativen Formulierung kann die zweite Teilwelle der Wellenvorrichtung auch eine Verlängerung der Wellenvorrichtung der Werkzeugmaschine in das externe Modul hinein darstellen. Es ist im Sinne der Erfindung bevorzugt, dass die zweite Teilwelle auch als "Moduleingangswelle" bezeichnet werden kann, wobei die zweite Teilwelle auf eine Wellenvorrichtung bzw. Getriebeausgangswelle der Werkzeugmaschine aufgeschraubt werden kann. Die zweite Teilwelle stellt dadurch vorzugsweise eine Verlängerung Wellenvorrichtung bzw. der Getriebeausgangswelle der Werkzeugmaschine dar. Die zweite Teilwelle der Wellenvorrichtung des externen Moduls kann somit vorzugsweise auch als Getriebeabtriebswellenverlängerung bezeichnet werden. Ihre Aufgabe ist es insbesondere, eine Verbindung zwischen dem externen Modul und der Werkzeugmaschine herzustellen, wobei die Verbindung zwischen dem externen Modul und der Werkzeugmaschine insbesondere durch eine Verbindung zwischen der zweiten Teilwelle der Wellenvorrichtung des externen Moduls und der Wellenvorrichtung der Werkzeugmaschine ("Getriebeabtriebswelle") vermittelt wird.

Es ist im Sinne der Erfindung bevorzugt, dass erste Teilwelle in einen Hohlraum der zweiten Teilwelle eingeführt werden kann. Die erste Teilwelle kann in einem hinteren Bereich ein Einsteckende aufweisen, mit dem voran es in den Hohlraum der zweiten Teilwelle einführt werden kann. Mit anderen Worten kann die Modulausgangswelle in einen Hohlraum der Moduleingangswelle eingeführt werden, wobei die Modulausgangswelle und die Moduleingangswelle zusammen bevorzugt die Wellenvorrichtung des externen Moduls bilden. Im verbundenen Zustand können die erste und die zweite Teilwelle bzw. die Modulausgangswelle und die Moduleingangswelle miteinander eine Drehbewegung ausführen, d.h. sie sind so miteinander verbunden, dass eine Drehbewegung einer der beiden Wellenteile dafür sorgt, dass sich auch das andere Wellenteil dreht. Es ist im Sinne der Erfindung bevorzugt, dass beiden Teilwellen der Wellenvorrichtung bzw. die Modulausgangswelle und die Moduleingangswelle eine gemeinsame Drehbewegung ausführen. Ermöglicht wird diese gemeinsame Drehbewegung und die damit verbundene Drehmomentübertragung vorzugsweise durch zueinander korrespondierend ausgebildete Konturen und Gegenkonturen an den beiden Teilwellen bzw. an der Modulausgangswelle und an der Moduleingangswelle der Wellenvorrichtung des externen Moduls.

Selbstverständlich können die Teilwellen auch so ausgebildet sein, dass die zweite Teilwelle einen Hohlraum zur Aufnahme eines Einsteckendes der ersten Teilwelle aufweist. Die erste Teilwelle kann dann in den Hohlraum der zweiten Teilwelle eingeführt werden, um die Teilwellen so miteinander zu verbinden, dass sie eine gemeinsame Drehbewegung ausführen können.

Die Lagerung der ersten Teilwelle in der zweiten Teilwelle ermöglicht vorteilhafterweise auch eine axiale Beweglichkeit der ersten Teilwelle. Es ist im Sinne der Erfindung bevorzugt, dass sich die erste Teilwelle beispielsweise in einem Rahmen von etwa 2 mm axial bewegen kann. Mit anderen Worten liegt ein axialer Bewegungsspielraum der ersten Welle bzw. der Modulausgangswelle in einem Bereich von etwa 2 mm, wobei die Bewegung der ersten Teilwelle bzw. der Modulausgangswelle von Anschlägen innerhalb des externen Moduls begrenzt werden kann. Der axiale Bewegungsspielraum der ersten Teilwelle der Wellenvorrichtung des externen Moduls ist vorzugsweise etwas größer als der Axialhub, der durch die Ausgestaltung und die Relativbewegung der Kurvenscheiben erzeugt wird.

Es ist im Sinne der Erfindung bevorzugt, dass die Wellenvorrichtung des externen Moduls, insbesondere eine zweite Teilwelle, mit einer Wellenvorrichtung der Werkzeugmaschine verbindbar ist. Die zweite Teilwelle der Wellenvorrichtung des externen Moduls kann vorzugsweise auch als Moduleingangswelle bezeichnet werden. Bei der Wellenvorrichtung der Werkzeugmaschine kann es sich insbesondere um eine Getriebeabtriebswelle der Werkzeugmaschine bzw. des Bohrgeräts handeln. Durch die Verbindung der Moduleingangswelle der Wellenvorrichtung des externen Moduls mit der Wellenvorrichtung der Werkzeugmaschine kann vorteilhafterweise eine Verbindung zwischen dem externen Modul und der Werkzeugmaschine hergestellt werden. Die Verbindung der Wellenvorrichtung der Werkzeugmaschine und der Wellenvorrichtung des externen Moduls erfolgt vorzugsweise durch eine erste Schnittstelle. Die erste Schnittstelle ist insbesondere dazu eingerichtet, die zweite Teilwelle der Wellenvorrichtung des externen Moduls mit der Wellenvorrichtung der Werkzeugmaschine zu verbinden.

Es ist im Sinne der Erfindung bevorzugt, dass das Gehäuse des externen Moduls mit einem Gehäuse der Werkzeugmaschine verbindbar ist. Das externe Modul weist ein Gehäuse auf, wobei eine der Kurvenscheiben des externen Moduls fest mit dem Gehäuse verbunden vorliegt. Diese Kurvenscheibe wird bevorzugt als gehäusefeste oder zweite Kurvenscheibe bezeichnet. Das Gehäuse des externen Moduls kann im Kontext der vorliegenden Erfindung vorzugsweise als «externes Gehäuse» bezeichnet werden. Das externe Gehäuse kann axial mit einem Gehäuse der Werkzeugmaschine verbunden werden. Die Werkzeugmaschine kann beispielsweise ein Getriebe- oder Motorgehäuse aufweisen, das vorzugsweise Bestandteil des Gehäuses der Werkzeugmaschine ist. Die Verbindung zwischen dem externen Gehäuse und dem Gehäuse der Werkzeugmaschine kann beispielsweise über eine Gehäuse-Schnittstelle bewirkt werden, die vorteilhafterweise eine zusätzliche Abstützfunktion für die Gehäuse gewährleistet und die einen Beitrag dazu leisten kann, dass Vibrationen und Schläge weniger stark auf die Werkzeugmaschine und damit auf den Nutzer übertragen werden.

Es ist im Sinne der Erfindung insbesondere bevorzugt, dass das Gehäuse des externen Moduls axial mit dem Getriebegehäuse der Werkzeugmaschine verbunden vorliegt bzw. mit dem Getriebegehäuse der Werkzeugmaschine verbunden werden kann. Beispielsweise kann das externe Modul bzw. sein Gehäuse über eine Lagerung mit dem Gehäuse der Werkzeugmaschine verbunden werden, wobei diese Lagerung vorzugsweise dazu eingerichtet ist, mit der Verlängerung der Wellenvorrichtung des externen Moduls zusammenzuwirken. Es ist im Kontext der vorliegenden Erfindung bevorzugt, dass die auftretenden Axial- bzw. Bohrkräfte durch den Betrieb der Werkzeugmaschine erzeugt und durch die zusätzliche Schlagbewegung, die mit Hilfe des externen Moduls generiert werden kann, überhöht werden. Ein solches externes Modul kann besonders einfach aufgebaut sein.

Es ist im Sinne der Erfindung ganz besonders bevorzugt, dass bei Verwendung des externen Moduls sowohl die Moduleingangswelle, d.h. die zweite Teilwelle, der Wellenvorrichtung mit der Getriebeabtriebswelle der Werkzeugmaschine verbunden vorliegt, als auch das externe Gehäuse axial mit dem Getriebegehäuse der Werkzeugmaschine verbunden vorliegt. Sowohl die Verbindung der Wellenvorrichtungen, als auch die Verbindung der Gehäuse des externen Moduls und der Werkzeugmaschine können über je eine Schnittstelle bewirkt werden, die im Sinne der Erfindung bevorzugt als erste und zweite Schnittstelle bezeichnet werden. Die zweite Schnittstelle kann vorzugsweise auch als "Gehäuse-Schnittstelle" bezeichnet werden. Vorteilhafterweise kann durch diese Ausgestaltung der Verbindung von externem Modul und Werkzeugmaschine eine Übertragung der Bohrkräfte auf die Handgriffe der Werkzeugmaschine vermindert werden. Dadurch werden der Nutzer bzw. seine Handgelenke erheblich geschont und ein längeres Arbeiten mit dem vorgeschlagenen System aus externem Modul und Werkzeugmaschine ermöglicht. Wenn es sich bei der Werkzeugmaschine um eine ständergeführte Werkzeugmaschine handelt, die bei Betrieb an einem Bohrständer befestigt ist, kann durch die Erfindung eine Übertragung der Bohrkräfte auf den Bohrständer vermindert werden. Durch die verminderte Übertragung der Bohrkräfte auf den Bohrständer kann vorteilhafterweise verhindert werden, dass die mechanische Stabilität der Anbringung der Werkzeugmaschine zum Beispiel durch Vibrationen oder dergleichen reduziert wird. Darüber hinaus werden durch die vorgeschlagene Verbindung zwischen externem Modul und Werkzeugmaschine besonders empfindliche Komponenten der Werkzeugmaschine, wie Lager oder Wälzlager, besonders wirksam geschützt. Dadurch können sich vorteilhafterweise die Lebenszeit der Werkzeugmaschine oder ihre Wartungsintervalle verlängern.

Es ist im Sinne der Erfindung bevorzugt, dass eine Lagerung des Gehäuses des externen Moduls auf der Wellenvorrichtung als schwimmende Lagerung ausgebildet ist. Vorzugsweise kann das externe Gehäuse über eine schwimmende Lagerung auf der zweiten Teilwelle der Wellenvorrichtung gelagert sein. Es ist im Sinne der Erfindung bevorzugt, dass eine axiale Überbestimmung durch eine schwimmende Lagerung des Gehäuses des externen Moduls auf der Wellenvorrichtung des externen Moduls verhindert werden kann. Mit anderen Worten kann eine schwimmende Lagerung des externen Gehäuses auf der Moduleingangswelle des externen Moduls vorgesehen sein, um eine axiale Überbestimmung und eine Übertragung der überhöhten axialen Bohrkräfte auf empfindliche Komponenten der Werkzeugmaschine besonders wirksam zu verhindern. Die Werkzeugmaschine kann so vor mechanischen Belastungen aufgrund von Über-Beanspruchung geschützt werden.

Es ist im Sinne der Erfindung bevorzugt, dass die Wellenvorrichtung des externen Moduls eine erste Teilwelle und eine zweite Teilwelle umfasst, wobei die erste Teilwelle und die zweite Teilwelle über eine Schnittstelle miteinander verbindbar sind. Vorzugsweise kann die erste Teilwelle oder die zweite Teilwelle in axialer Richtung ortsfest ausgebildet sein, während die jeweils andere Teilwelle in axialer Richtung beweglich ausgebildet ist. Die jeweils andere, nicht ortsfest ausgebildete Teilwelle des externen Moduls kann sich dahingegen bewegen, insbesondere in axiale Richtung, d.h. von der anderen Teilwelle weg oder auf die andere Teilwelle zu. Es kann im Sinne der Erfindung allerdings bevorzugt sein, Anschläge vorzusehen, die die Beweglichkeit der nicht-ortsfest ausgebildeten Teilwelle zu beschränken, um ein Auseinanderfallen der Einheit zu verhindern.

Es ist im Sinne der Erfindung ganz besonders bevorzugt, dass die erste Kurvenscheibe fest mit der ersten Teilwelle des externen Moduls verbunden vorliegt. Die erste Teilwelle liegt vorzugsweise in einem vorderen Bereich des externen Moduls angeordnet vor und kann bevorzugt auch als «Modulausgangswelle» bezeichnet werden. Vorzugsweise kann die erste Teilwelle mit einer Werkzeugaufnahme oder einem Werkzeug der Werkzeugmaschine verbunden werden, so dass die erste Teilwelle die Drehbewegung der Werkzeugmaschine bzw. ein Drehmoment auf ihr Werkzeug überträgt. Durch die Zwischenschaltung des externen Moduls kann die Drehbewegung des Werkzeugs mit der durch die Kurvenscheiben erzeugten Schlagbewegung überlagert werden, so dass vorteilhafterweise eine überlagerte Schlag- und Drehbewegung für das Werkzeug der Werkzeugmaschine erhalten wird. In diesem Ausführungsbeispiel der Erfindung stellt die erste Teilwelle vorzugsweise die nicht ortsfest ausgebildete Teilwelle des externen Moduls dar, die sich insbesondere in axialer Richtung bewegen kann, d.h. von der anderen Teilwelle weg oder auf die andere Teilwelle zu. Die ortsfeste Teilwelle ist in diesem Ausführungsbeispiel der Erfindung die zweite Teilwelle.

Die zweite Teilwelle kann im Sinne der Erfindung vorzugsweise auch als «Moduleingangswelle» bezeichnet werden. Die zweite Teilwelle liegt vorzugsweise in einem hinteren Bereich des externen Moduls angeordnet vor und kann mit einer Wellenvorrichtung der Werkzeugmaschine verbunden werden. Die Wellenvorrichtung der Werkzeugmaschine fungiert vorzugsweise als Getriebeabtriebswelle und überträgt die Drehbewegung des Motors der Werkzeugmaschine auf die Wellenvorrichtung des externen Moduls bzw. der zweiten Teilwelle der Wellenvorrichtung des externen Moduls. Die Wellenvorrichtungen des externen Moduls und die Wellenvorrichtung der Werkzeugmaschine können mit Hilfe eines Gewindes miteinander verbunden, d.h. insbesondere verschraubt, werden. Dazu kann beispielsweise die zweite Teilwelle der Wellenvorrichtungen des externen Moduls ein Innengewinde aufweisen, das mit einem korrespondierend ausgebildeten Außengewinde der Wellenvorrichtung der Werkzeugmaschine zusammenwirkt, um eine Schraubverbindung zwischen den Wellenvorrichtungen zu bewirken.

Es ist im Sinne der Erfindung bevorzugt, dass die Schnittstelle dazu eingerichtet ist, verschiedene, auftretende Drehmomente bei Betrieb der Werkzeugmaschine zu übertragen. Die Schnittstelle ist darüber hinaus dazu ausgebildet, eine bevorzugt axiale Relativbewegung der Teilwellen des Moduls zuzulassen. Diese zuzulassende Relativbewegung zwischen den Teilwellen liegt vorzugsweise mindestens in einer Größenordnung des Axialhubs, d.h. einer Amplitude der Schlagbewegung. Mit anderen Worten können sich die Teilwellen des externen Moduls zumindest in dem Maße zueinander bewegen, wie dies auch die Kurvenscheiben des Moduls tun, um die Schlagbewegung zu erzeugen.

Es ist im Sinne der Erfindung besonders bevorzugt, dass die erste Kurvenscheibe («wellenfest») auf der beweglich ausgebildeten Teilwelle angeordnet vorliegt. Ein wesentlicher Vorteil der Schnittstelle bzw. der Ausgestaltung der Wellenvorrichtung aus zwei Teilwellen besteht darin, dass diejenigen Komponenten der Werkzeugmaschine, die auf der ortsfest ausgebildeten Teilwelle angeordnet vorliegen, sich nicht relativ in axialer Richtung in Bezug auf andere Getriebekomponenten der Werkzeugmaschine bewegen können. Dadurch kann der Verschleiß der besonders belasteten Bauteile erheblich verringert werden. Darüber hinaus ist es durch die Vorsehung der Schnittstelle bzw. aufgrund der Zweiteiligkeit der Wellenvorrichtung nicht mehr erforderlich, dass die Verzahnung der zum Einsatz kommenden Zahnräder geradeverzahnt ausgebildet sein muss. Vielmehr können nun auch schrägverzahnte Zahnräder zum Einsatz kommen, wodurch vorteilhafterweise die Flexibilität bei der Auswahl der Zahnräder erhöht werde kann. Außerdem kann durch die Schrägverzahnung eine verbesserte Laufruhe und eine erhöhte Festigkeit erreicht werden.

In einem zweiten Aspekt betrifft die Erfindung ein System umfassend eine Werkzeugmaschine und ein externes Modul. Die für das externe Modul eingeführten Begriffe, Definitionen und technischen Vorteile gelten vorzugsweise für das System analog. In dem System liegen die Werkzeugmaschine und das externe Modul über eine erste Schnittstelle und eine zweite Schnittstelle miteinander verbunden vor, wobei die erste Schnittstelle zur Verbindung der Wellenvorrichtung des externen Moduls mit einer Wellenvorrichtung der Werkzeugmaschine eingerichtet ist und die zweite Schnittstelle zur Verbindung des Gehäuses des externen Moduls mit einem Gehäuse der Werkzeugmaschine eingerichtet ist. Vorzugsweise kann die erste Schnittstelle in einem Kontaktbereich der Wellenvorrichtungen des externen Moduls und der Werkzeugmaschine vorliegen, während die zweite Schnittstelle in einem Kontaktbereich der Gehäuse der Werkzeugmaschine und des externen Moduls angeordnet vorliegt. Es ist im Sinne der Erfindung ganz besonders bevorzugt, dass die erste Schnittstelle zur Verbindung der zweiten Teilwelle bzw. der Moduleingangswelle der Wellenvorrichtung des externen Moduls mit der Wellenvorrichtung der Werkzeugmaschine eingerichtet ist, während die zweite Schnittstelle dazu eingerichtet ist, die Gehäuse des externen Moduls und der Werkzeugmaschine miteinander zu verbinden. Durch die Vorsehung der zwei Schnittstellen zwischen der Werkzeugmaschine und dem externen Modul wird vorteilhafterweise verhindert, dass ein Kraftfluss über empfindliche Komponenten der Werkzeugmaschine, wie beispielsweise deren Lager, erfolgt. Darüber hinaus wird eine bessere Abstützung zwischen dem externen Modul und der Werkzeugmaschine erreicht.

Vorteilhafterweise kann mit der Vorsehung der zwei Schnittstellen der Kraftfluss von dem Getriebe des externen Moduls auf das Gehäuse, insbesondere ein Getriebegehäuse, der Werkzeugmaschine geführt werden, so dass die empfindlichen Komponenten der Werkzeugmaschine besonders gut vor Beeinträchtigungen geschützt werden. Darüber hinaus kann mit der Vorsehung der zwei Schnittstellen eine zusätzliche Möglichkeit zur Abstützung des externen Moduls auf der Werkzeugmaschine bereitgestellt werden.

Es ist im Sinne der Erfindung bevorzugt, dass die Schlagbewegung, mit der die Drehbewegung des Werkzeugs der Werkzeugmaschine überlagert werden kann, ein- und ausschaltbar ist, indem die Kurvenscheiben in axialer Richtung so auseinander bewegt werden, dass kein Kontakt mehr zwischen den Kurvenscheiben besteht.

Die Kurvenscheiben können vorzugsweise dadurch auseinander bewegt werden, dass die erste Kurvenscheibe von der zweiten Kurvenscheibe abgerückt wird. Das bedeutet im Sinne der Erfindung bevorzugt, dass die zweite, gehäusefeste Kurvenscheibe ortsfest bleibt und nicht bewegt wird, während die erste, wellenfeste Kurvenscheibe in axialer Richtung von der zweiten Kurvenscheibe weggerückt wird. Die erste Kurvenscheibe kann vorzugsweise zusammen mit der Wellenvorrichtung der Werkzeugmaschine verschoben werden. Es kann im Sinne der Erfindung aber auch bevorzugt sein, dass die erste Kurvenscheibe ohne die Wellenvorrichtung der Werkzeugmaschine verschoben wird. Die Wellenvorrichtung stellt vorzugsweise die Getriebeabtriebswelle der Werkzeugmaschine dar. Es ist im Sinne der Erfindung bevorzugt, dass die erste Kurvenscheibe vor dem Abrücken von der zweiten Kurvenscheibe in einer ersten Position vorliegt, in der die Microhammering-Funktion bereitgestellt wird. In dieser ersten Position der ersten Kurvenscheibe liegen die erste Kurvenscheibe und die zweite Kurvenscheibe vorzugsweise in Kontakt miteinander vor und durch den Kontakt zwischen den Kurvenscheiben bzw. durch deren Zusammenwirken werden die Schlagebewegungen erzeugt, mit denen die reine Drehbewegung der Werkzeugmaschine bzw. ihres Werkzeugs überlagert werden kann. Dieser Zustand des Systems, in dem die erste Kurvenscheibe in der ersten Position vorliegt, wird im Sinne der Erfindung bevorzugt als "Microhammering-Modus" bezeichnet.

Es ist im Sinne der Erfindung bevorzugt, dass die erste Kurvenscheibe nach dem Abrücken von der zweiten Kurvenscheibe in einer zweiten Position vorliegt, in der das System eine im Wesentlichen reine Drehbewegung des Werkzeugs der Werkzeugmaschine ausführt. In dieser zweiten Position der ersten Kurvenscheibe liegen die erste Kurvenscheibe und die zweite Kurvenscheibe vorzugsweise nicht in Kontakt miteinander, sondern getrennt voneinander vor. Durch den fehlenden Kontakt zwischen den Kurvenscheiben werden keine Schläge mehr zur Überlagerung der reinen Drehbewegung erzeugt, so dass die Werkzeugmaschine beispielsweise wie ein konventionelles Kernbohrgerät ohne Microhammering-Funktion betrieben werden kann. Dieser Zustand des Systems, in dem die erste Kurvenscheibe in der zweiten Position vorliegt, wird im Sinne der Erfindung bevorzugt als "Drehbewegungs-Modus" bezeichnet.

Es ist im Sinne der Erfindung bevorzugt, dass die erste Kurvenscheibe in dieser Ausgestaltung der Erfindung von der Werkzeugmaschine weggerückt wird, d.h. dass ein Abstand zwischen der Werkzeugmaschine und der ersten Kurvenscheibe vergrößert wird.

Es ist im Sinne der Erfindung bevorzugt, dass die erste Kurvenscheibe in einer zweiten Position mit einem Befestigungselement fixierbar ist. Vorzugsweise kann die Kurvenscheibe in der zweiten Position mit dem Befestigungselement axial fixiert werden. Das Befestigungselement kann bevorzugt dazu eingerichtet sein, einen Abstand zwischen der ersten Kurvenscheibe und anderen Komponenten des Systems aus externem Modul und Werkzeugmaschine einzustellen oder aufrechtzuerhalten. Beispielsweise kann mit dem Befestigungselement ein Abstand zwischen der ersten Kurvenscheibe und einer Lagerung auf der Hauptwelle eingestellt werden.

Es ist im Sinne der Erfindung bevorzugt, dass die Kurvenscheiben auseinander bewegt werden, indem die zweite Kurvenscheibe von der ersten Kurvenscheibe abgerückt wird. Das bedeutet im Sinne der Erfindung bevorzugt, dass die erste, wellenfeste Kurvenscheibe ortsfest bleibt und nicht bewegt wird, während die zweite, gehäusefeste Kurvenscheibe in axialer Richtung von der ersten Kurvenscheibe weggerückt wird. Es ist im Sinne der Erfindung bevorzugt, dass die zweite Kurvenscheibe vor dem Abrücken von der ersten Kurvenscheibe in einer ersten Position vorliegt, in der die Microhammering-Funktion bereitgestellt wird. In dieser ersten Position der ersten Kurvenscheibe liegen die erste Kurvenscheibe und die zweite Kurvenscheibe vorzugsweise in Kontakt miteinander vor, so dass die Schlagebewegungen zur Überlagerung der Drehbewegung des Werkzeugs der Werkzeugmaschine erzeugt werden können ("Microhammering-Modus").

Es ist im Sinne der Erfindung bevorzugt, dass die zweite Kurvenscheibe nach dem Abrücken von der ersten Kurvenscheibe in einer zweiten Position vorliegt, in der das System eine im Wesentlichen reine Drehbewegung des Werkzeugs der Werkzeugmaschine ausführt. In dieser zweiten Position der ersten Kurvenscheibe liegen die erste Kurvenscheibe und die zweite Kurvenscheibe vorzugsweise nicht in Kontakt miteinander, sondern getrennt voneinander vor ("Drehbewegungs-Modus").

Es ist im Sinne der Erfindung bevorzugt, dass die zweite Kurvenscheibe durch ein Betätigungselement relativ zum Gehäuse des externen Moduls verschiebbar ist bzw. verschoben werden kann. Vorzugsweise kann die zweite Kurvenscheibe zusammen mit dem Gehäuse des externen Moduls relativ zur Werkzeugmaschine verschoben werden. Das bedeutet im Sinne der Erfindung bevorzugt, dass die zweite Kurvenscheibe in dieser Ausführungsform der Erfindung in Bezug auf die Wellenvorrichtung verschoben werden kann. Es ist im Sinne der Erfindung bevorzugt, dass bei Verwendung eines externen Moduls, d.h. eines externen Schlagmechanismus, die Möglichkeit besteht, die zweite, gehäusefeste Kurvenscheibe zu verschieben, indem das Gehäuse des externen Moduls axial und relativ zum Gehäuse der Werkzeugmaschine verschoben wird. Diese Verschiebung der zweiten Kurvenscheiben kann insbesondere relativ zum Getriebegehäuse der Werkzeugmaschine erfolgen. Dadurch kann vorteilhafterweise auch eine Verschiebung der zweiten Kurvenscheibe in Bezug auf die Getriebeabtriebswelle und/oder in Bezug auf die wellenfeste, erste Kurvenscheibe erreicht werden.

Im Kontext der vorliegenden Erfindung wird darüber eine Werkzeugmaschine mit einem Werkzeug offenbart, wobei das Werkzeug der Werkzeugmaschine dazu ausgebildet ist, eine Drehbewegung auszuführen. Die für das externe Modul und das System eingeführten Begriffe, Definitionen und technischen Vorteile gelten vorzugsweise für die Werkzeugmaschine analog. Die Werkzeugmaschine ist dazu eingerichtet, eine Schlagbewegung zu erzeugen, wobei die Werkzeugmaschine eine erste Kurvenscheibe und eine zweite Kurvenscheibe umfasst, wobei die erste Kurvenscheibe mit einer Wellenvorrichtung der Werkzeugmaschine verbunden vorliegt («wellenfest») und die zweite Kurvenscheibe ortsfest mit einem Gehäuse der Werkzeugmaschine verbunden vorliegt («gehäusefest»), wobei die erste Kurvenscheibe und die zweite Kurvenscheibe zur Erzeugung der Schlagbewegung zusammenwirken, wobei die Werkzeugmaschine dazu ausgebildet ist, die Drehbewegung des Werkzeugs der Werkzeugmaschine mit der Schlagbewegung zu überlagern. Die Wellenvorrichtung der Werkzeugmaschine, mit der die erste Kurvenscheibe verbunden werden kann, kann im Sinne der Erfindung bevorzugt auch als Getriebeabtriebswelle der Werkzeugmaschine bezeichnet werden. Mit anderen Worten kann die erste Kurvenscheibe auf der Wellenvorrichtung bzw. auf der Getriebeabtriebswelle der Werkzeugmaschine montiert vorliegen. Es ist im Sinne der Erfindung bevorzugt, dass sich in diesem Falle vorzugsweise die gesamte Wellenvorrichtung im Rahmen der Microhammering-Bewegung bewegen kann.

Es ist im Sinne der Erfindung bevorzugt, dass die Wellenvorrichtung der Werkzeugmaschine eine erste Teilwelle und eine zweite Teilwelle umfasst, wobei die erste Teilwelle und die zweite Teilwelle über eine Schnittstelle miteinander verbindbar sind. Die Schnittstelle ist vorzugsweise dazu eingerichtet, die erste und die zweite Teilwelle der Wellenvorrichtung der Werkzeugmaschine miteinander zu verbinden. Die Schnittstelle wird daher vorzugsweise auch als «WellenSchnittstelle» bezeichnet. Vorzugsweise kann die erste Teilwelle oder die zweite Teilwelle in axialer Richtung ortsfest ausgebildet sein, während die jeweils andere Teilwelle in axialer Richtung beweglich ausgebildet ist. Das bedeutet im Sinne der Erfindung bevorzugt, dass innerhalb der Werkzeugmaschine eine Lageranordnung zur radialen und/oder axialen Positionierung bzw. Fixierung der Wellenvorrichtung bzw. der Abtriebswelle vorgesehen ist. Diese Lageranordnung kann vorzugsweise als Fest-/Loslagerung ausgebildet sein oder als Lageranordnung in X- oder O-Anordnung. Aufgrund der Wellenschnittstelle ist vorzugsweise insbesondere die abtriebsseitige Teilwelle axial beweglich. Die abtriebsseitige Teilwelle ist im Sinne dieser Ausgestaltung insbesondere die zweite Teilwelle der Werkzeugmaschine.

Die jeweils andere, nicht ortsfest ausgebildete Teilwelle der Werkzeugmaschine kann sich dahingegen bewegen, insbesondere in axiale Richtung, d.h. von der anderen Teilwelle weg oder auf die andere Teilwelle zu. Es kann im Sinne der Erfindung allerdings bevorzugt sein, Anschläge vorzusehen, die die Beweglichkeit der nicht-ortsfest ausgebildeten Teilwelle beschränken, um ein Auseinanderfallen der Welle zu verhindern. Darüber hinaus weist die Werkzeugmaschine ein Zahnrad oder mehrere Zahnräder, die vorzugsweise ebenfalls auf der ortsfesten Teilwelle der Werkzeugmaschine angeordnet vorliegen. Es ist im Sinne der Erfindung bevorzugt, dass die Teilwellen der Wellenvorrichtung stets dazu eingerichtet sind, eine Drehbewegung auszuführen, während die axiale Beweglichkeit der Teilwellen der Wellenvorrichtung teilweise eingeschränkt sein kann.

Es ist im Sinne der Erfindung bevorzugt, dass die Schnittstelle dazu eingerichtet ist, verschiedene, auftretende Drehmomente bei Betrieb der Werkzeugmaschine auf das Werkzeug der Werkzeugmaschine zu übertragen. Die Schnittstelle ist darüber hinaus dazu ausgebildet, eine bevorzugt axiale Relativbewegung der Teilwellen der Werkzeugmaschine zuzulassen. Diese zuzulassende Relativbewegung zwischen den Teilwellen der Werkzeugmaschine liegt vorzugsweise mindestens in einer Größenordnung des Axialhubs, d.h. einer Amplitude der Schlagbewegung. Mit anderen Worten können sich die Teilwellen der Werkzeugmaschine zumindest in dem Maße zueinander bewegen, wie dies auch die Kurvenscheiben der Werkzeugmaschine tun, um die Schlagbewegung zu erzeugen.

Es ist im Sinne der Erfindung bevorzugt, dass die erste Kurvenscheibe («wellenfest») auf der beweglich ausgebildeten Teilwelle angeordnet vorliegt. Vorzugsweise bewegt sich bei Betrieb der Werkzeugmaschine insbesondere nur der beweglich ausgebildete Teil der Getriebeabtriebswelle der Werkzeugmaschine, und zwar vorzugsweise im Rahmen des Axialhubs der Schlagbewegungen, mit denen die reine Drehbewegung der Werkzeugmaschine überlagert werden kann.

Ein wesentlicher Vorteil der Schnittstelle bzw. bevorzugt zweiteiligen Ausgestaltung der Wellenvorrichtung der Werkzeugmaschine der Werkzeugmaschine besteht darin, dass diejenigen Komponenten der Werkzeugmaschine, die auf der axial ortsfest ausgebildeten Teilwelle angeordnet vorliegen, keine Relativgeschwindigkeit in Bezug auf andere Getriebekomponenten der Werkzeugmaschine aufweisen. Dadurch kann der Verschleiß der besonders belasteten Bauteile erheblich verringert werden. Darüber hinaus ist es durch die vorgeschlagene Ausgestaltung der Werkzeugmaschine mit einer Schnittstelle bzw. mit einer Unterteilung der Wellenvorrichtung der Werkzeugmaschine bzw. der Getriebeabtriebswelle der Werkzeugmaschine in zwei Teilwellen nicht mehr erforderlich, dass die Verzahnung der zum Einsatz kommenden Zahnräder geradeverzahnt ausgebildet sein muss. Vielmehr können nun auch schrägverzahnte Zahnräder zum Einsatz kommen, wodurch vorteilhafterweise die Flexibilität bei der Auswahl der Zahnräder erhöht werden kann. Dadurch kann insbesondere die Laufruhe und die Festigkeit verbessert werden.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: schematische Ansicht einer bevorzugten Ausgestaltung des Systems aus externem Modul und Werkzeugmaschine
- Fig. 2: schematische Ansicht einer bevorzugten Ausgestaltung des Kontaktbereichs zwischen externem Modul und Werkzeugmaschine
- Fig. 3: Seitenansicht (oben) und Draufsicht (unten) einer bevorzugten Ausgestaltung einer Kurvenscheibe und ihrer Oberfläche
- Fig. 4: Grafische Erläuterungen zur möglichen Ausgestaltung einer Oberfläche einer Kurvenscheibe und der Strukturelemente
- Fig. 5: schematische Seitenansicht einer Werkzeugmaschine mit einer integrierten Lösung zur Erzeugung einer Schlagbewegung, wobei die Werkzeugmaschine eine Wellenschnittstelle aufweist

### Ausführungsbeispiele und Figurenbeschreibung:

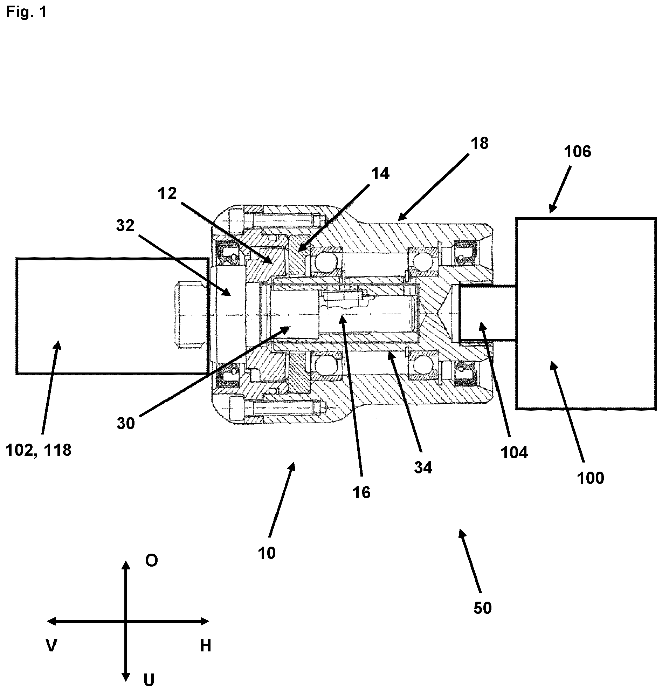

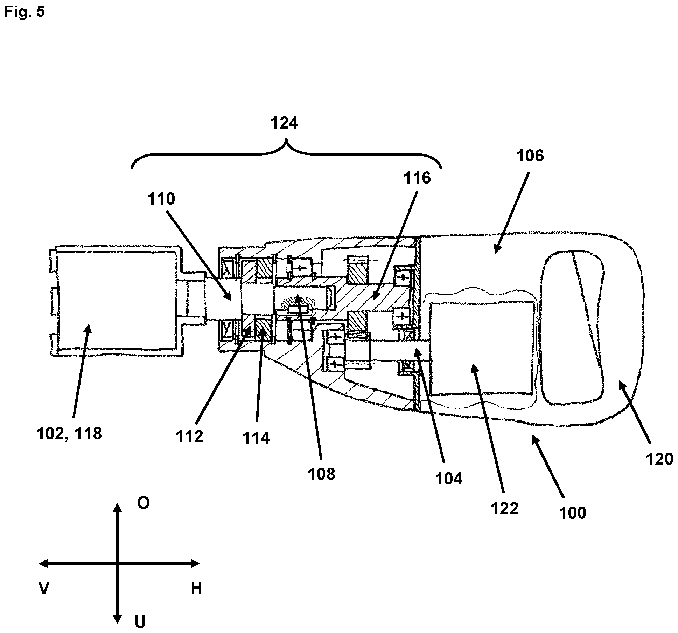

Figur 1 zeigt eine schematische Ansicht einer bevorzugten Ausgestaltung des Systems 50 aus externem Modul 10 und Werkzeugmaschine 100. Im mittleren Bereich von Figur 1 ist das externe Modul 10 dargestellt, das zwischen der Werkzeugmaschine 100 und dem Werkzeug 102 der Werkzeugmaschine 100 angeordnet vorliegen kann. Das Werkzeug 102 der Werkzeugmaschine 100 kann über eine Werkzeugaufnahme 118 mit der mit Werkzeugmaschine 100 verbunden werden. In dem in Figur 1 dargestellten Ausführungsbeispiel ist das externe Modul 10 insbesondere zwischen der Werkzeugaufnahme 118 und der Werkzeugmaschine 100 angeordnet. Bei der Werkzeugmaschine 100 kann es sich vorzugsweise um ein Bohrgerät bzw. ein Kernbohrgerät handeln; das Werkzeug 102 der Werkzeugmaschine 100 kann beispielsweise als Bohrkrone ausgebildet sein. Die Werkzeugmaschine 100 weist einen Motor (122, siehe Fig. 5) auf, wobei das Werkzeug 102 der Werkzeugmaschine 100 über eine Wellenvorrichtung 104 der Werkzeugmaschine 100 angetrieben werden kann. Insbesondere erzeugt der Motor 122 der Werkzeugmaschine 100 eine Drehbewegung D, die auf das Werkzeug 102 der Werkzeugmaschine 100 übertragen werden kann. Die Wellenvorrichtung 104 der Werkzeugmaschine 100 kann vorzugsweise auch als Getriebeabtriebswelle 104 bezeichnet werden.

Die vorliegende Erfindung betrifft ein externes Modul 10, mit dem die Drehbewegung D des Werkzeugs 102 der Werkzeugmaschine 100 mit einer Schlagbewegung S überlagert werden kann. Die Schlagbewegung S kann vorteilhafterweise mit dem externen Modul 10 erzeugt werden. Die Schlagbewegungen S, mit denen die reine Drehbewegung D der Werkzeugmaschine 100 überlagert werden kann, werden vorzugsweise auch als «Microhammering» bezeichnet. Mit anderen Worten kann mit dem externen Modul 10 eine Microhammering-Funktion für eine Werkzeugmaschine 100 zur Verfügung gestellt werden. Die hier vorgestellte technische Lösung betrifft die Erzeugung der Schlagbewegungen S durch ein externes Modul 10, während bei konventionellen Werkzeugmaschinen 100, wie sie aus dem Stand der Technik bekannt sind, häufig integrierte Lösungen eingesetzt werden, bei denen die Schlagbewegungen S innerhalb der Werkzeugmaschine 100 selbst erzeugt werden.

Das externe Modul 10 kann wie ein Adapter zwischen Werkzeug 102 und Werkzeugmaschine 100 «zwischengeschaltet» werden. Das externe Modul 10 weist eine erste Kurvenscheibe 12 und eine zweite Kurvenscheibe 14 auf, wobei die erste Kurvenscheibe 12 wellenfest ausgebildet ist, d.h. mit einer Wellenvorrichtung 16 des externen Moduls 10 verbunden vorliegt. Die zweite Kurvenscheibe 14 ist vorzugsweise gehäusefest ausgebildet. Das bedeutet im Sinne der Erfindung bevorzugt, dass die zweite Kurvenscheibe 14 mit einem Gehäuse 18 des externen Moduls 10 verbunden ist. Somit ist die erste Kurvenscheibe 12 in der Lage, sich zu drehen, und zwar zusammen mit der Wellenvorrichtung 16 des externen Moduls 10, während die zweite Kurvenscheibe 14 nicht dazu eingerichtet ist, sich zu drehen. Die erste Kurvenscheibe 12 ist bei Betrieb der Werkzeugmaschine 100 axial beweglich ausgebildet, um den Axialhub bzw. die Schlagebewegung S zu erzeugen. Die zweite Kurvenscheibe 14 ist bei Betrieb der Werkzeugmaschine 100 in axialer Richtung nicht beweglich ausgebildet. Vorzugsweise ist die erste Kurvenscheibe 12 dazu in der Lage, sich von der zweiten Kurvenscheibe 14 abzudrücken, um den Axialhub bzw. die Schlagebewegung S zu erzeugen. Das bedeutet im Sinne der Erfindung bevorzugt, dass sich die erste Kurvenscheibe 12 des externen Moduls 10 in die Raumrichtungen «nach vorne» und «nach hinten» bewegen kann.

Die Raumrichtungen sind in Figur 1 mit einem Richtungskreuz dargestellt. Die Raumrichtung «nach vorne» wird dabei mit dem Buchstaben «V» bezeichnet, während die Raumrichtung «nach hinten» mit dem Buchstaben «H» bezeichnet wird, die Raumrichtung «nach oben» mit dem Buchstaben «O» und die Raumrichtungen «nach unten» mit dem Buchstaben «U». Das Werkzeug 102 der Werkzeugmaschine 100 ist demnach in einem vorderen Bereich der Werkzeugmaschine 10 angeordnet, während die Werkzeugmaschine 100 in Figur 1 hinter dem externen Modul 10 abgebildet ist. Wenn sich die erste Kurvenscheibe 12 des externen Moduls 10 bewegt, bewegt sich vorzugsweise auch die Wellenvorrichtung 16 des externen Moduls 10 mit, da die erste Kurvenscheibe 12 mit der Wellenvorrichtung 16 des externen Moduls 10 fest verbunden vorliegt. Es ist im Sinne der Erfindung bevorzugt, dass sich die zweite Kurvenscheibe 14 und das Gehäuse 18 des externen Moduls 10 im Betrieb nicht relativ zur Werkzeugmaschine 100 bewegen können.

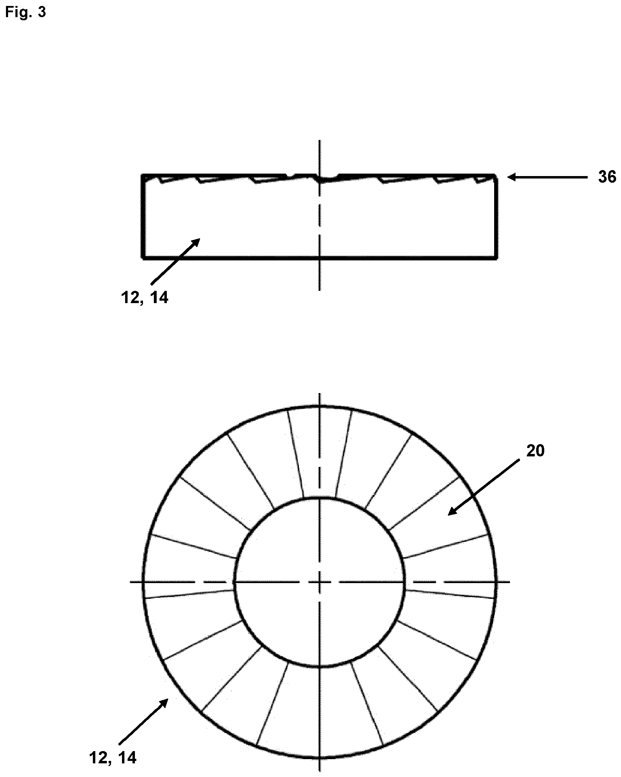

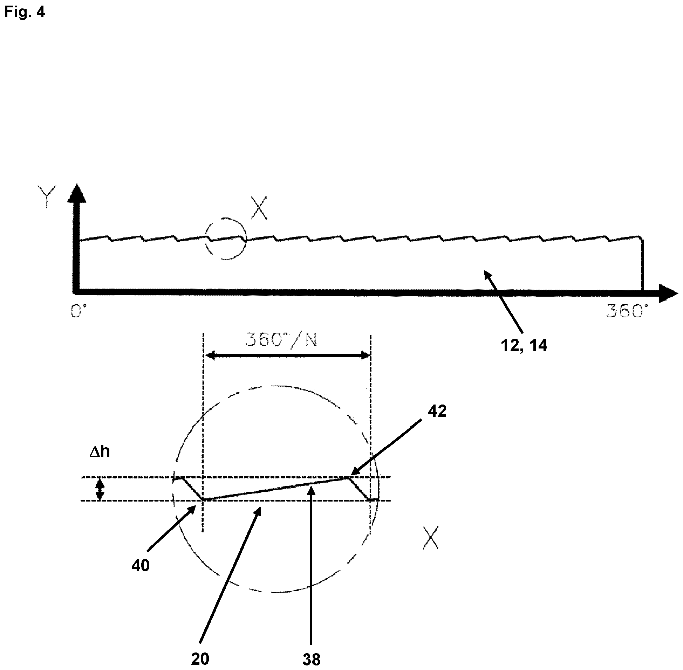

Die beiden Kurvenscheiben 12, 14 weisen jeweils mindestens ein Strukturelement 20 (siehe Figur 3 und 4) auf, wobei die Strukturelemente 20 dazu eingerichtet sind, die Schlagbewegungen S zu erzeugen, wenn sich die Kurvenscheiben 12, 14 bei Betrieb der Werkzeugmaschine 100 relativ zueinander bewegen. Durch die Vorsehung der Strukturelemente 20 an beiden Kurvenscheiben 12, 14 werden vorteilhafterweise hohe Flächenpressungen vermieden. Die Strukturelemente 20 können beispielsweise rampenähnlich ausgebildet sein, wobei eine Bewegung der einen Kurvenscheibe, beispielsweise der ersten Kurvenscheibe 12, dem Höhenprofil der Strukturelemente 20 der anderen Kurvenscheiben - beispielsweise der zweiten Kurvenscheibe 14 - folgt, wenn die Kurvenscheiben 12, 14 eine rotatorische Relativbewegung ausführen. Es ist im Sinne der Erfindung bevorzugt, dass sich insbesondere die erste Kurvenscheibe 12 dreht, während die zweite Kurvenscheibe 14 still steht. Durch den Stillstand der zweiten Kurvenscheibe 14 und die Bewegung der ersten Kurvenscheibe 12 mit einer ersten Drehgeschwindigkeit kommt es vorteilhafterweise zu einer Relativbewegung der Kurvenscheiben 12, 14. Aufgrund der Bohranpresskraft, mit der die Werkzeugmaschine 100 auf den zu bearbeitenden Untergrund gedrückt wird, werden die Kurvenscheiben 12, 14 während ihrer Relativbewegung axial zusammen- bzw. aufeinander gedrückt. Auf diese Weise liegen die Kurvenscheiben 12, 14 überwiegend in engem Kontakt miteinander vor und gleiten entsprechend der Geometrie bzw. Beschaffenheit der Oberflächen 36 der Kurvenscheiben 12, 14 auf- bzw. voneinander ab, so dass der Schlagimpuls bzw. die Schlagbewegung erzeugt wird.

Am Ende der Rampe bzw. des Strukturelements 20 fällt die erste Kurvenscheibe 12 auf die nachfolgende Rampe der Kurvenscheibe 14 zurück, wodurch eine Schlagbewegung S erzeugt wird. Insbesondere wird durch das Herunterfallen der einen ersten Kurvenscheibe 12 ein Axialhub erzeugt. Der Axialhub kann vorzugsweise einer Wegstrecke entsprechen, wobei die Wegstrecke beispielweise der Höhe einer Rampe, d.h. eines Strukturelements 20, entsprechen kann. Wenn mehrere Strukturelemente 20 auf den Kurvenscheiben 12, 14 vorgesehen sind, kann es zu einem alternierenden Axialhub kommen. Das bedeutet im Sinne der Erfindung bevorzugt, dass rasch aufeinanderfolgend Schlagbewegungen S erzeugt werden, die dann die Micro-Hammering-Funktion für die Werkzeugmaschine 100 bilden.

Das externe Modul 10 kann eine Schnittstelle 30 umfassen, wobei die Schnittstelle 30 dazu eingerichtet ist, eine erste Teilwelle 32 und eine zweite Teilwelle 34 der Wellenvorrichtung 16 des externen Moduls 10 miteinander zu verbinden. In dem in Figur 1 dargestellten Ausführungsbeispiel der Erfindung ist die erste, wellenfeste Kurvenscheibe 12 insbesondere mit der ersten Teilwelle 32 der Wellenvorrichtung 16 des externen Moduls 10 verbunden. Die Schnittstelle 30 kann vorzugsweise auch als "Wellenschnittstelle" bezeichnet werden. Eine der beiden Teilwellen 32, 34, d.h. die erste Teilwelle 32 oder die zweite Teilwelle 34, kann in axialer Richtung ortsfest ausgebildet sein, während die jeweils andere Teilwelle (34 oder 32) in axialer Richtung beweglich ausgebildet ist. Mit anderen Worten kann eine der Teilwellen 32, 34 in einer Vorwärts-Rückwärtsrichtung verschoben werden, während die andere Teilwelle 34, 32 ortsfest ausgebildet ist.

Bei integrierten Lösungen (siehe Figur 5) kann die Werkzeugmaschine 100 ebenfalls eine Schnittstelle 108 zur Verbindung der Teilwellen 110, 116 aufweisen, wobei die Schnittstelle 108 dazu eingerichtet ist, eine erste Teilwelle 110 und eine zweite Teilwelle 116 der Wellenvorrichtung 124 der Werkzeugmaschine 100 miteinander zu verbinden. Auch bei einer solchen integrierten Lösung kann die erste Teilwelle 110 oder die zweite Teilwelle 116 in axialer Richtung ortsfest ausgebildet sein, während die jeweils andere Teilwelle 116, 110 in axialer Richtung beweglich ausgebildet ist. Bei einer integrierten Lösung kann die Werkzeugmaschine 100 zwei Kurvenscheiben 112, 114 umfassen, wobei die erste Kurvenscheibe 112 mit der Wellenvorrichtung 124 der Werkzeugmaschine 100 und die zweite Kurvenscheibe 114 mit dem Gehäuse 106 der Werkzeugmaschine 100 verbunden vorliegt. Vorzugsweise kann die erste Kurvenscheibe 112 mit der ersten Teilwelle 110 der Wellenvorrichtung 104 der Werkzeugmaschine 100 verbunden werden. Es ist im Sinne der Erfindung bevorzugt, dass die erste Kurvenscheibe 112 auf der axial beweglich ausgebildeten Teilwelle (110 oder 116) angeordnet vorliegt, wobei vorzugsweise die erste Teilwelle 110 der Wellenvorrichtung 124 der Werkzeugmaschine 100 beweglich ausgebildet ist.

Wie aus Figur 1 hervorgeht, kann die zweite Teilwelle 34 der Wellenvorrichtung 16 des externen Moduls 10 eine Verlängerung der Wellenvorrichtung 16 darstellen. Das Gehäuse 18 des externen Moduls 10 kann auf dieser zweiten Teilwelle 34 der Wellenvorrichtung 16 gelagert sein, wobei die Lagerung 24 insbesondere als schwimmende Lagerung ausgebildet ist. Die zweite Teilwelle 34 der Wellenvorrichtung 16 des externen Moduls 10 wird im Sinne der Erfindung bevorzugt auch als «Getriebeabtriebsverlängerung» bezeichnet, da sie in anderer Perspektive auch eine Verlängerung der Wellenvorrichtung 104 der Werkzeugmaschine 100 in das externe Modul 10 hinein darstellt. Die zweite Teilwelle 34 kann mit der Wellenvorrichtung 104 der Werkzeugmaschine 100 verbunden werden, damit die Drehbewegung D der Werkzeugmaschine 100 über die Wellenvorrichtungen 16, 104 auf das Werkzeug 102 der Werkzeugmaschine 100 übertragen werden kann.

Die Schlagbewegung S, mit der die Drehbewegung D des Werkzeugs 102 der Werkzeugmaschine 100 überlagert werden kann, kann vorteilhafterweise ein- und ausgeschaltet werden, indem die Kurvenscheiben 12, 14 in axialer Richtung so auseinander bewegt werden, dass kein Kontakt mehr zwischen den Kurvenscheiben 12, 14 besteht. Dieses Auseinanderziehen der Kurvenscheiben 12, 14 kann beispielsweise dadurch erfolgen, dass die erste Kurvenscheibe 12 von der zweiten Kurvenscheibe 14 abgerückt wird. Die erste Kurvenscheibe 12 kann vor dem Abrücken in einer ersten Position und nach dem Abrücken in einer zweiten Position vorliegen, wobei die erste Kurvenscheibe 12 in einer zweiten Position mit einem Befestigungselement 26 fixierbar ist. Es ist im Sinne der Erfindung bevorzugt, dass die Kurvenscheiben 12, 14 durch die Betätigung eines Bewegungsgewindes auseinandergerückt werden. Es kann dann ein Befestigungselement 26 vorgesehen sein, um das Gewinde an der gewünschten Position zu fixieren.

Die Kurvenscheiben 12, 14 können aber auch dadurch auseinander bewegt werden, dass die zweite Kurvenscheibe 14 von der ersten Kurvenscheibe 12 abgerückt wird. Dabei kann die zweite Kurvenscheibe 14 durch ein Betätigungselement 28 relativ zum Gehäuse 18 des externen Moduls 10 verschoben werden. Aufgrund der Verbindung zwischen der zweiten Kurvenscheibe 14 und dem Gehäuse 18 des externen Moduls 10 kann die zweite Kurvenscheibe 14 insbesondere zusammen mit dem Gehäuse 18 des externen Moduls 10 relativ zur Werkzeugmaschine 100 verschoben werden.

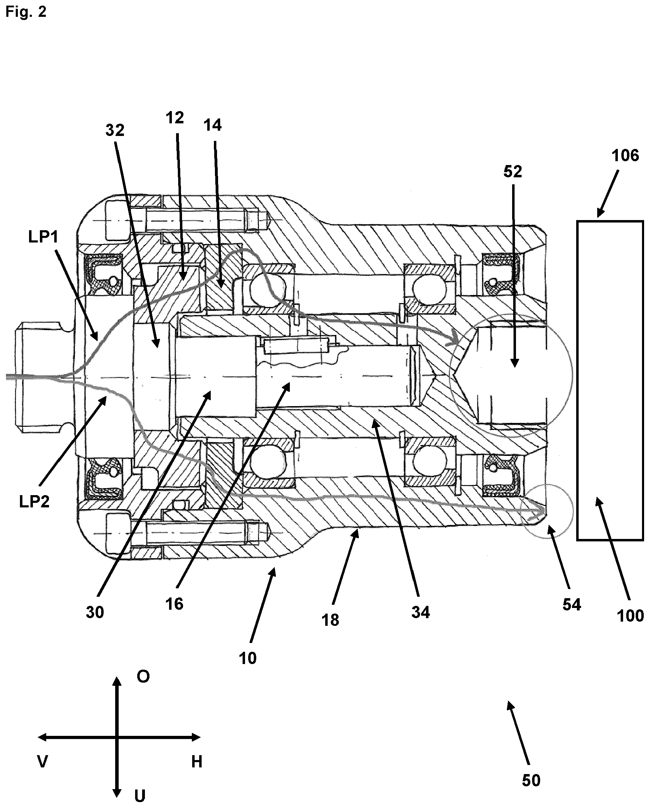

Figur 2 zeigt eine schematische Ansicht einer bevorzugten Ausgestaltung des Kontaktbereichs zwischen externem Modul 10 und Werkzeugmaschine 100. Das externe Modul 10 kann auf seiner Rückseite mit der Werkzeugmaschine 100 verbunden werden, während das externe Modul 10 auf seiner Vorderseite mit der Werkzeugaufnahme 118 bzw. dem Werkzeug 102 der Werkzeugmaschine verbunden werden kann. Zur Verbindung des externen Moduls 10 mit der Werkzeugmaschine 100 können mindestens zwei Schnittstellen 52, 54 vorgesehen sein, wobei die erste Schnittstelle 52 zur Verbindung der Wellenvorrichtung 16 des externen Moduls 10 mit einer Wellenvorrichtung 104 der Werkzeugmaschine 100 eingerichtet ist, während die zweite Schnittstelle 54 zur Verbindung des Gehäuses 18 des externen Moduls 10 mit einem Gehäuse 106 der Werkzeugmaschine 100 eingerichtet ist. Es ist im Sinne der Erfindung bevorzugt, dass mit der ersten Schnittstelle 52 insbesondere die zweite Teilwelle 34 der Wellenvorrichtung 16 des externen Moduls 10 ("Moduleingangswelle") mit der Wellenvorrichtung 104 der Werkzeugmaschine 100 verbunden werden kann.

Insbesondere kann das Gehäuse 18 des externen Moduls 10 mit dem Gehäuse 106 der Werkzeugmaschine 100 verbunden werden. Darüber hinaus kann die die zweite Teilwelle 34 der Wellenvorrichtung 16 des externen Moduls 10 mit der Wellenvorrichtung 104 der Werkzeugmaschine 100 verbunden werden. Kontaktpunkte bzw. Kontaktbereiche zwischen dem externen Modul 10 und der Werkzeugmaschine 100 bestehen somit insbesondere im Bereich der Gehäuse 18, 106 des externen Moduls 10 ("zweite Schnittstelle 54") und der Werkzeugmaschine 100 und im Bereich der Wellenvorrichtungen 16, 104 ("erste Schnittstelle 52"). Die erste Schnittstelle 52 und die zweite Schnittstelle 54 zwischen der Werkzeugmaschine 100 und dem externen Modul 10 sind insbesondere in Figur 2 abgebildet.

In Figur 2 sind unterschiedliche Lastpfade LP1, LP2 dargestellt, die mögliche Verläufe des Kraftflusses innerhalb des externen Moduls 10 zeigen. Der obere, erste Lastpfad LP1 ist ein möglicher Lastpfad, den der Kraftfluss innerhalb des externen Moduls 10 nehmen kann. Der untere, zweite Lastpfad LP2 ist der bevorzugte Lastpfad, bei dem der Kraftfluss in das Gehäuse 106 der Werkzeugmaschine 100 eingeleitet wird. Dadurch können empfindliche Komponenten innerhalb der Werkzeugmaschine 100 besser geschützt werden als bei Lastpfad LP1, bei dem die Kraft in die Wellenvorrichtungen 16, 104 des externen Moduls 10 bzw. der Werkzeugmaschine 100 eingeleitet werden kann. Dadurch können beispielsweise Lager oder Wälzlager beschädigt werden.

Figur 3 zeigt eine Seitenansicht und Draufsicht einer bevorzugten Ausgestaltung einer Kurvenscheibe 12, 14 und ihrer Oberfläche 36. Auf der Oberfläche 36 der Kurvenscheiben 12, 14 können Strukturelemente 20 vorgesehen sein, wobei eine Anzahl der Strukturelemente 20 mit dem Bezugszeichen «N» bezeichnet wird. Beispielsweise sind in der im oberen Bereich von Figur 3 abgebildeten Seitenansicht einer Kurvenscheibe 12, 14 sechs vollständige Strukturelemente 20 dargestellt. Die Strukturelemente 20 in dem in Figur 3 dargestellten Ausführungsbeispiel der Erfindung sind als Rampen ausgebildet, die eine schiefe Ebene 38 (siehe Figur 4) umfassen und durch eine Höhendifferenz Δh zwischen dem tiefsten Punkt 40 und dem höchsten Punkt 42 der Rampe 20 gekennzeichnet sind (siehe Figur 4). Beispielsweise weist die in Figur 3 dargestellte Kurvenscheibe 12, 14 siebzehn Strukturelemente 20 auf, so dass N = 17. Im unteren Bereich von Figur 3 ist eine Draufsicht auf eine Oberfläche 36 der Kurvenscheibe 12, 14 dargestellt.

Figur 4 zeigt grafische Erläuterungen zur möglichen Ausgestaltung einer Oberfläche 36 einer Kurvenscheibe 12, 14 und der Strukturelemente 20. Es ist im Sinne der Erfindung bevorzugt, dass die Strukturelemente 20 gleichmäßig auf dem Umfang der Kurvenscheibe 12, 14 angeordnet vorliegen. Die Länge der schiefen Ebene 38 ist bei solchen gleichmäßig angeordneten Strukturelementen 20 vorzugsweise gleich oder ähnlich groß. Es kann aber im Sinne der Erfindung auch bevorzugt sein, dass die Strukturelemente 20 nicht gleichmäßig auf dem Umfang der Kurvenscheibe 12, 14 angeordnet vorliegen. Die schiefen Ebenen 38 der Strukturelemente 20 können dann unterschiedliche Längen aufweisen. Es ist im Sinne der Erfindung bevorzugt, dass die Höhen Δh der Strukturelemente 20 jeweils gleich oder ähnlich sind. Die Höhendifferenz Δh kann beispielsweise in einem Bereich von 0,5 mm liegen.

Der obere Bereich der Figur 4 zeigt beispielhaft eine Abwicklung eines Profils einer Kurvenscheibe 12, 14 mit siebzehn Strukturelementen 20, wobei sich die Strukturelemente 20 auf dem Vollkreis (360 °) der Kurvenscheibe 12, 14 verteilen. Im unteren Bereich der Figur 4 ist beispielhaft eine Seitenansicht einer möglichen Ausgestaltung eines Strukturelements 20 dargestellt. Das Strukturelement 20 weist eine schiefe Ebene 38 auf, die sich zwischen einem tiefsten Punkt 40 und einem höchsten Punkt 42 des Strukturelements 20 erstreckt. Das in Figur 4, unten dargestellte Strukturelement 20 ist beispielsweise rampenförmig ausgebildet, wobei eine Höhendifferenz Δh zwischen dem tiefsten Punkt 40 und dem höchsten Punkt 42 des Strukturelements 20 beispielweise in einem Bereich von 0,5 mm liegen kann.

Figur 5 zeigt eine Seitenansicht einer möglichen Ausgestaltung einer Werkzeugmaschine 100 mit einer integrierten Lösung zur Erzeugung einer Schlagbewegung S, wobei die Werkzeugmaschine 100 eine Wellenschnittstelle 108 aufweist. In Figur 5 wird insbesondere eine Werkzeugmaschine 100 gezeigt, bei der die Microhammering-Funktion innerhalb der Werkzeugmaschine 100 selbst erzeugt bzw. bereitgestellt wird. Dazu umfasst die Werkzeugmaschine 100 eine ersten Kurvenscheibe 112 und eine zweite 114, die entsprechend den Ausführungen für die Kurvenscheiben 12, 14 des externen Moduls 10 ausgebildet und beschaffen sind. Die Kurvenscheiben 112, 114 der Werkzeugmaschine 100 sind auch dazu eingerichtet, auf dieselbe Weise zusammenzuwirken, um Schlagbewegungen S und/oder Schlagimpulse zu erzeugen, so dass die in Figur 5 dargestellte Werkzeugmaschine 100 als solche dazu in der Lage ist, eine Microhammering-Funktion bereitzustellen. Die in Figur 5 abgebildete Werkzeugmaschine 100 weist ein Gehäuse 106, sowie zwei Wellenvorrichtungen 104, 124 auf. Die Wellenvorrichtung 104 entspricht vorzugsweise einer Rotorwelle des Motors 122 der Werkzeugmaschine 100. Die weitere Wellenvorrichtung 124 entspricht von der Funktion her der Wellenvorrichtung 16 des externen Moduls 10, wobei auch die weitere Wellenvorrichtung 124 zwei Teilwellen 110, 116 umfassen kann. Darüber hinaus kann die Werkzeugmaschine 100 einen Handgriff 120 aufweisen, mit dem ein Nutzer die Werkzeugmaschine 100 halten und führen kann. Die Werkzeugmaschine 100 kann ein Getriebe aufweisen, so dass eine weiteren Wellenvorrichtung 124 der Werkzeugmaschine 100 nicht notwendigerweise direkt mit dem Motor 122 der Werkzeugmaschine 100 verbunden vorliegen muss. Beispielsweise können Zahnräder oder andere Wellenvorrichtungen (nicht dargestellt) zwischen den Wellenvorrichtungen 104, 124 und dem Motor 122 der Werkzeugmaschine 100 vorgesehen sein, um zum Beispiel eine Drehzahl des Motors 122 anzupassen. Vorzugsweise kann das Getriebe der Werkzeugmaschine 100 dazu eingerichtet sein, eine hohe Drehzahl des Motors 122 so zu reduzieren, dass eine zum Bohren geeignete Drehzahl für das Werkzeug 102 der Werkzeugmaschine 100 erhalten wird. Die Wellenvorrichtungen 104, 124 der Werkzeugmaschine 100 können in einer Aufwärts-/Abwärtsrichtung versetzt zueinander angeordnet vorliegen, wobei die Wellenvorrichtungen 104, 124 der Werkzeugmaschine 100 vorzugsweise im Wesentlichen parallel zueinander orientiert sind.

In der in Figur 5 dargestellten Werkzeugmaschine 100 ist die Wellenvorrichtung 104 dazu eingerichtet, mit der weiteren Wellenvorrichtung 124 zusammenzuwirken, die im Falle der Bereitstellung der Microhammering-Funktion durch ein externes Modul 10 der Wellenvorrichtung 16 des externen Moduls 10 entspricht. Diese weitere Wellenvorrichtung 124 kann vorzugsweise eine erste Teilwelle 110 und eine zweite Teilwelle 116 umfassen, wobei die erste Teilwelle 110 von der Funktion her der ersten Teilwelle 32 des externen Moduls 10 und die zweite Teilwelle 116 von der Funktion her der zweiten Teilwelle 34 des externen Moduls 10 entspricht. Auch bei der integrierten Lösung, bei der die Microhammering-Funktion von der Werkzeugmaschine 100 selbst bereitgestellt wird und die in Figur 5 abgebildet ist, ist eine Schnittstelle 108 zur Verbindung der beiden Teilwellen 110 und 116 vorgesehen. Bei den Gegenständen, die in Figur 5 mit einem Kreuz gekennzeichnet sind, kann es sich vorzugsweise um Lager oder Wälzlager handeln, die eine Axialbewegung der ersten Teilwelle 110 und der daran befestigten ersten Kurvenscheibe 112 ermöglichen, so dass von der Werkzeugmaschine 100 eine Schlagbewegung S erzeugt bzw. eine Microhammering-Funktion bereitgestellt werden kann.

### Bezugszeichenliste

- 10: externes Modul
- 12: erste Kurvenscheibe
- 14: zweite Kurvenscheibe
- 16: Wellenvorrichtung des externen Moduls
- 18: Gehäuse des externen Moduls
- 20: Strukturelemente
- 24: Lagerung des Gehäuses des externen Moduls
- 26: Befestigungselement
- 28: Betätigungselement
- 30: Schnittstelle
- 32: erste Teilwelle, Modulausgangswelle
- 34: zweite Teilwelle, Moduleingangswelle
- 36: Oberfläche einer Kurvenscheibe
- 38: schiefe Ebene eines Strukturelements
- 40: tiefster Punkt eines Strukturelements
- 42: höchster Punkt eines Strukturelements
- 50: System umfassend eine Werkzeugmaschine und ein externes Modul
- 52: erste Schnittstelle
- 54: zweite Schnittstelle
- 100: Werkzeugmaschine
- 102: Werkzeug der Werkzeugmaschine
- 104: Wellenvorrichtung der Werkzeugmaschine
- 106: Gehäuse der Werkzeugmaschine
- 108: Schnittstelle zur Verbindung der Teilwellen
- 110: erste Teilwelle
- 112: erste Kurvenscheibe der Werkzeugmaschine
- 114: zweite Kurvenscheibe der Werkzeugmaschine
- 116: zweite Teilwelle
- 118: Werkzeugaufnahme der Werkzeugmaschine
- 120: Handgriff der Werkzeugmaschine
- 122: Motor der Werkzeugmaschine
- 124: weitere Wellenvorrichtung
- S: Schlagbewegung
- D: Drehbewegung
- Δh: Höhendifferenz der Strukturelemente
- N: Anzahl der Strukturelemente
- V: vorne, Vorderseite, Raumsichtung "nach vorne"
- H: hinten, Hinter- oder Rückseite, Raumsichtung "nach hinten"
- U: unten, Unterseite, Raumsichtung "nach unten"
- O: oben, Oberseite, Raumsichtung "nach oben"
- LP1: Lastpfad 1
- LP2: Lastpfad 2

## Patentansprüche

1. Externes Modul (10) zur Erzeugung einer Schlagbewegung S, wobei das externe Modul (10) an eine Werkzeugmaschine (100) anbringbar ist, wobei ein Werkzeug (102) der Werkzeugmaschine (100) dazu ausgebildet ist, eine Drehbewegung D auszuführen,
**dadurch gekennzeichnet, dass**
das externe Modul (10) eine erste Kurvenscheibe (12) und eine zweite Kurvenscheibe (14) umfasst, wobei die erste Kurvenscheibe (12) mit einer Wellenvorrichtung (16) des externen Moduls (10) verbunden vorliegt und die zweite Kurvenscheibe (14) ortsfest mit einem Gehäuse (18) des externen Moduls (10) verbunden vorliegt, wobei die erste Kurvenscheibe (12) und die zweite Kurvenscheibe (14) zur Erzeugung der Schlagbewegung S zusammenwirken, wobei das externe Modul (10) dazu ausgebildet ist, die Drehbewegung D des Werkzeugs (102) der Werkzeugmaschine (100) mit der Schlagbewegung S zu überlagern.

2. Externes Modul (10) nach Anspruch 1
**dadurch gekennzeichnet, dass**
die erste Kurvenscheibe (12) und die zweite Kurvenscheibe (14) jeweils mindestens ein Strukturelement (20) aufweisen, so dass bei einer Relativbewegung der ersten Kurvenscheibe (12) und der zweiten Kurvenscheibe (14) einen alternierenden Axialhub erzeugt wird.

3. Externes Modul (10) nach Anspruch 1 oder 2
**dadurch gekennzeichnet, dass**
die Wellenvorrichtung (16) des externen Moduls (10) eine erste Teilwelle (32) und eine zweite Teilwelle (34) umfasst, wobei die erste Teilwelle (32) und die zweite Teilwelle (34) über eine Schnittstelle (30) miteinander verbindbar sind.

4. Externes Modul (10) nach Anspruch 3
**dadurch gekennzeichnet, dass**
die erste Teilwelle (32) oder die zweite Teilwelle (34) in axialer Richtung ortsfest ausgebildet ist, während die jeweils andere Teilwelle (34, 32) in axialer Richtung beweglich ausgebildet ist.

5. Externes Modul (10) nach Anspruch 4
**dadurch gekennzeichnet, dass**
die erste Kurvenscheibe (12) auf der beweglich ausgebildeten Teilwelle (32 oder 34) angeordnet vorliegt.

6. Externes Modul (10) nach einem der vorhergehenden Ansprüche
**dadurch gekennzeichnet, dass**
die Schlagbewegung S eine höhere Frequenz aufweist als die Drehbewegung D der Werkzeugmaschine (100) und/oder seines Werkzeugs (102).

7. Externes Modul (10) nach einem der vorhergehenden Ansprüche
**dadurch gekennzeichnet, dass**
das externe Modul (10) über die erste Teilwelle (32) oder die zweite Teilwelle (34) mit der Werkzeugmaschine (100) verbindbar ist.

8. Externes Modul (10) nach einem der vorhergehenden Ansprüche
**dadurch gekennzeichnet, dass**
das Gehäuse (18) des externen Moduls (10) mit einem Gehäuse (106) der Werkzeugmaschine (100) verbindbar ist.

9. Externes Modul (10) nach einem der vorhergehenden Ansprüche
**dadurch gekennzeichnet, dass**
eine Lagerung (24) des Gehäuses (18) des externen Moduls (10) auf der Wellenvorrichtung (16) des externen Moduls (10) als schwimmende Lagerung ausgebildet ist.

10. System (50) umfassend eine Werkzeugmaschine (100) und ein externes Modul (10) nach einem der vorhergehenden Ansprüche
**dadurch gekennzeichnet, dass**
die Werkzeugmaschine (100) und das externe Modul (10) über eine erste Schnittstelle (52) und eine zweite Schnittstelle (54) miteinander verbunden vorliegen, wobei die erste Schnittstelle (52) zur Verbindung der Wellenvorrichtung (16) des externen Moduls (10) mit einer Wellenvorrichtung (104) der Werkzeugmaschine (100) eingerichtet ist und die zweite Schnittstelle (54) zur Verbindung des Gehäuses (18) des externen Moduls (10) mit einem Gehäuse (106) der Werkzeugmaschine (100) eingerichtet ist.

11. System (50) nach Anspruch 10
**dadurch gekennzeichnet, dass**
die Schlagbewegung S, mit der die Drehbewegung D des Werkzeugs (102) der Werkzeugmaschine (100) überlagert werden kann, ein- und ausschaltbar ist, indem die Kurvenscheiben (12, 14) in axialer Richtung so auseinander bewegt werden, dass kein Kontakt mehr zwischen den Kurvenscheiben (12, 14) besteht.

12. System (50) nach Anspruch 11
**dadurch gekennzeichnet, dass**
die Kurvenscheiben (12, 14) auseinander bewegt werden, indem die erste Kurvenscheibe (12) von der zweiten Kurvenscheibe (14) abgerückt wird.

13. System (50) nach Anspruch 12
**dadurch gekennzeichnet, dass**
die erste Kurvenscheibe (12) in einer zweiten Position mit einem Befestigungselement (26) fixierbar ist.

14. System (50) nach Anspruch 11
**dadurch gekennzeichnet, dass**
die Kurvenscheiben (12, 14) auseinander bewegt werden, indem die zweite Kurvenscheibe (14) von der ersten Kurvenscheibe (12) abgerückt wird.

15. System (50) nach Anspruch 14
**dadurch gekennzeichnet, dass**
die zweite Kurvenscheibe (14) zusammen mit dem Gehäuse (18) des externen Moduls (10) relativ zur Werkzeugmaschine (100) verschiebbar ist.
